# EUROPÄISCHE PATENTSCHRIFT

(11) **EP 3 510 061 B1**
(45) Veröffentlichungstag und Bekanntmachung des Hinweises auf die Patenterteilung: **15.04.2020**
(21) Anmeldenummer: 17758201.2
(22) Anmeldetag: 31.08.2017
(51) Int. Cl.: C08F 8/06, C08F 20/34, C08F 20/36, C08F 220/34, C08F 222/10, C08F 220/36, H01M 4/60

(54) **VERFAHREN ZUR VERBESSERTEN OXIDATION SEKUNDÄRER AMINGRUPPEN**
METHOD FOR IMPROVED OXIDATION OF SECONDARY AMINE GROUPS
PROCÉDÉ D'OXYDATION AMÉLIORÉE DE GROUPES AMINES SECONDAIRES

(30) Priorität: 06.09.2016 EP 16187383
(43) Veröffentlichungstag der Anmeldung: 17.07.2019
(73) Patentinhaber: Evonik Operations GmbH, 45128 Essen (DE)
(72) Erfinder: MEIER, Christian, 64295 Darmstadt (DE); FLITTNER, Michael, 63776 Mömbris (DE); KÖRNER, Christine, 63743 Aschaffenburg (DE); KORELL, Michael, 44805 Bochum (DE); WOLF, Jörn Klaus Erich, 45130 Essen (DE)
(74) Vertreter: Evonik Patent Association
(86) Internationale Anmeldenummer: PCT/EP2017/071876
(87) Internationale Veröffentlichungsnummer: WO 2018/046387

(56) Entgegenhaltungen:
- EP-A1- 1 911 775
- JP-A- 2006 022 177
- LIANG WENZHONG ED - BOUDENNE ABDERRAHIM ET AL: "Effect of structure of polymeric hindered amines on the oxidation of polymers: Part 1-Syntheses of polymeric hindered piperidyl esters", POLYMER DEGRADATION AND STABILITY, BARKING, GB, Bd. 31, Nr. 3, Januar 1991 (1991-01), Seiten 353-364, XP024144553, ISSN: 0141-3910, DOI: 10.1016/0141-3910(91)90043-Q [gefunden am 1991-01-01] in der Anmeldung erwähnt

## Beschreibung

Die vorliegende Erfindung betrifft ein Verfahren zur Oxidation sekundäre Aminogruppen zu den entsprechenden radikalischen Nitroxylgruppen innerhalb eines Polymers umfassend beispielsweise 2,2,6,6-Tetramethylpiperidinyleinheiten. Das Verfahren gewährleistet einen besonders hohen Oxidationsgrad.

### Hintergrund der Erfindung

Organische Batterien sind elektrochemische Zellen, die ein organisches Ladungsspeicherungsmaterial als aktives Elektrodenmaterial zur Speicherung von elektrischer Ladung verwenden. Diese Sekundärbatterien zeichnen sich durch ihre besonderen Eigenschaften, wie Schnellladefähigkeit, hohe Lebensdauer, geringes Gewicht, hohe Flexibilität und einfache Verarbeitbarkeit aus. Als aktive Elektrodenmaterialien zur Ladungsspeicherung sind im Stand der Technik verschiedene polymere Strukturen beschrieben worden, so zum Beispiel polymere Verbindungen mit organischen Nitroxylradikalen als aktiven Einheiten (beispielsweise in WO 2012/133202 A1, WO 2012/133204 A1, WO 2012/120929 A1, WO 2012/153866 A1, WO 2012/153865 A1, JP 2012-221574 A, JP 2012-221575 A, JP 2012-219109 A, JP 2012-079639 A, WO 2012/029556 A1, JP 2011-252106 A, JP 2011-074317 A, JP 2011-165433 A, WO 2011034117 A1, WO 2010/140512 A1, WO 2010/104002 A1, JP 2010-238403 A, JP 2010-163551 A, JP 2010-114042 A, WO 2010/002002 A1, WO 2009/038125 A1, JP 2009-298873 A, WO 2004/077593 A1, WO 2009/145225 A1, JP 2009-238612 A, JP 2009-230951 A, JP 2009-205918 A, JP 2008-234909 A, JP 2008-218326 A, WO 2008/099557 A1, WO 2007/141913 A1, US 2002/0041995 A1, EP 1128453 A2; A. Vlad, J. Rolland, G. Hauffman, B. Ernould, J.-F. Gohy, ChemSusChem 2015, 8, 1692 - 1696) oder polymere Verbindungen mit organischen Phenoxylradikalen oder Galvinoxylradikalen als aktiven Einheiten (zum Beispiel US 2002/0041995 A1, JP 2002-117852 A).

Besonders hervorzuheben ist dabei Poly(2,2,6,6-Tetramethylpiperidinyloxylmethacrylat), dessen Synthese von K. Nakahara, S. Iwasa, M. Satoh, Y. Morioka, J. Iriyama, M. Suguro, E. Hasegawa, Chem Phys Lett 2002, 359, 351 - 354 und J. Kim, G. Cheruvally, J. Choi, J. Ahn, S. Lee, S. Choi, C. Song, Solid State lonics 2007, 178, 1546 - 1551 beschrieben ist. Weitere Synthesemethoden sind in den folgenden Druckschriften beschrieben: JP 2006-022177 A, WO 2015/032951 A1, EP 1 752 474 A1, EP 1 911 775 A1, EP 2 042 523 A1. Außerdem beschreibt auch Liang Wenzhong in Polymer Degradation and Stability 1991, 31, 353 - 364 die Nitroxidierung zu diesem Polymer, wobei als Lösungsmittel Ethanol im Überschuss eingesetzt wird.

Dabei ist vor allem die EP 1 911 775 A1 hervorzuheben, welche ein Verfahren zur Polymerisierung von 2,2,6,6-Tetramethylpiperidinylymethacrylat und anschließender Oxidation der sekundären Aminogruppen innerhalb der 2,2,6,6-Tetramethylpiperidinyleinheit in eine radikalische 2,2,6,6-Tetramethylpiperidinyloxylgruppe (im Folgenden "Nitroxylierung") beschreibt. Der in diesem Dokument des Standes der Technik erreichte Nitroxylierungsgrad (bzw. Oxidationsgrad) ist mit 95.5 % hoch. Dennoch besteht weiterhin das Bedürfnis, einen noch besseren Oxidationsgrad zu erreichen.

Daneben beschreibt die EP 1 911 775 A1 im Absatz [0046] zwar, dass das Verfahren in einem breiten Temperaturbereich von 0 bis 90 °C anwendbar ist. Dennoch geht aus den in den Absätzen [0053], [0054], [0055] beschriebenen Beispiel der EP 1 911 775 A1 hervor, dass die Polymerisation am besten bei hohe Temperaturen wie 80 °C durchzuführen sei.

Die Durchführung bei einer solch hohen Temperatur ist allerdings ökonomisch nachteilig. Gerade im großtechnischen Maßstab ist es wünschenswert, diese Reaktion durchführen zu können, ohne zusätzliche Energie zum Erhitzen der Reaktionslösung aufbringen zu müssen. In manchen Fällen ist es außerdem auch wünschenswert, die Reaktion bei Kühlung unter 0°C durchführen zu können, da durch die Kühlung das Auftreten starker Exothermien besser kontrolliert werden kann.

Die Aufgabe der vorliegenden Erfindung bestand deshalb darin, ein Verfahren zur Verfügung zu stellen, welches eine möglichst hohe Oxidation der sekundären Aminogruppen in einem Polymer umfassend 2,2,6,6-Tetramethylpiperidinylylgruppen oder ähnliche Gruppen zu radikalischen Nitroxylgruppen erreicht. Das Verfahren sollte gerade auch bei Raumtemperatur und niedrigeren Temperaturen zu besseren Oxidationsraten führen.

Es wurde nun überraschenderweise ein Verfahren gefunden, welches die vorgenannte Aufgabe löst.

### Detaillierte Beschreibung der Erfindung

1) Die vorliegende Erfindung betrifft demnach ein Verfahren zur Herstellung eines Polymers **P¹** umfassend n¹ Wiederholungseinheiten der allgemeinen chemischen Struktur **(I)** mit 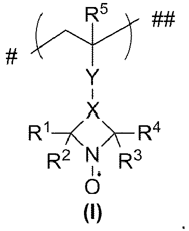 welches dadurch gekennzeichnet ist, dass man ein Polymer **P²** umfassend n² Wiederholungseinheiten der allgemeinen chemischen Struktur **(II)** mit 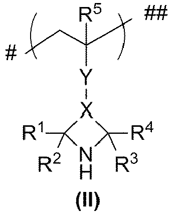
   in einem Lösungsmittel umfassend Wasser und Ethanol, wobei im Lösungsmittel das Ethanol im Unterschuss bezogen auf Wasser vorliegt, wobei das Massenverhältnis von Wasser zu Ethanol im Lösungsmittel im Bereich 51 : 49 bis 99 : 1 liegt, insbesondere bei einer Temperatur **T₁** ≤ 40 °C, oxidiert,
   wobei n¹, n² unabhängig voneinander jeweils eine ganze Zahl im Bereich von 4 - 3000000, insbesondere 4 - 1000000, bevorzugt 4 - 100000, bevorzugter 4 - 10000, noch bevorzugter 4 - 5000 ist,
   wobei die Wiederholungseinheiten der chemischen Struktur **(I)** innerhalb des Polymers **P¹** gleich oder zumindest teilweise voneinander verschieden sind,
   wobei die Wiederholungseinheiten der chemischen Struktur **(I)** innerhalb des Polymers **P¹** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
   wobei die Wiederholungseinheiten der chemischen Struktur **(II)** innerhalb des Polymers **P²** gleich oder zumindest teilweise voneinander verschieden sind,
   wobei die Wiederholungseinheiten der chemischen Struktur **(II)** innerhalb des Polymers **P²** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
   und wobei in den chemischen Strukturen **(I)** und **(II)** die Reste R¹, R², R³, R⁴, R⁵ ausgewählt sind aus der Gruppe bestehend aus Wasserstoff, verzweigte oder unverzweigte Alkylgruppe mit 1 bis 4 Kohlenstoffatomen, bevorzugt R¹, R², R³, R⁴ = Methyl und R⁵ = Wasserstoff oder Methyl, X ausgewählt ist aus der Gruppe bestehend aus *-CH₂-**C**'H-CH₂-**,*-**C**'H-CH₂-**, *-**C**'=CH-**,
   wobei "*" jeweils die Bindung zu dem mit R¹ und R² verknüpften Kohlenstoffatom bezeichnet,
   wobei "**" jeweils die Bindung zu dem mit R³ und R⁴ verknüpften Kohlenstoffatom bezeichnet,
   wobei "**C'**" ein Kohlenstoffatom bezeichnet, das zusätzlich mit dem Rest Y verknüpft ist,
   wobei Y ausgewählt aus den verbrückenden Resten **(III)** und **(IV)** ist,
      wobei **(III)** die Struktur &-(Y¹)ₚ₁-[C=X¹]ₚ₂-(Y²)ₚ₃-B-(Y³)ₚ₆-[C=X²]ₚ₅-(Y⁴)ₚ₄-&& aufweist,
      und wobei **(IV)** die Struktur &-(Y⁵)ₚ₉-(C=X³)ₚ₈-(Y⁶)ₚ₇-&& aufweist,
      wobei in den verbrückenden Resten **(III)** und **(IV)**
      p1, p2, p3 jeweils 0 oder 1 mit der Maßgabe, dass nicht gleichzeitig p1 = p3 = 1 und p2 = 0 ist, sind,
      p4, p5, p6 jeweils 0 oder 1 mit der Maßgabe, dass nicht gleichzeitig p4 = p6 = 1 und p5 = 0 ist, sind,
      p7, p8, p9 jeweils 0 oder 1 mit der Maßgabe, dass nicht gleichzeitig p7 = p9 = 1 und p8 = 0 ist, und dass, wenn p7 = 1 und p8 = 0, dann p9 = 0 ist, sind,
      X¹, X², X³ unabhängig voneinander ausgewählt aus der Gruppe bestehend aus O, S sind,
      Y¹, Y², Y³, Y⁴, Y⁵, Y⁶ unabhängig voneinander ausgewählt aus der Gruppe bestehend aus O, S, NH, N-Alkyl sind,
      und wobei Y¹ für p1 = 1, p2 = p3 = 0 auch N O• sein kann,
      und wobei Y⁴ für p4 = 1, p5 = p6 = 0 auch N O• sein kann,
      und wobei Y⁵ für p9 = 1, p7 = p8 = 0 auch N O• sein kann,
      B ein zweiwertiger, gegebenenfalls substituierter (hetero)aromatischer Rest oder ein zweiwertiger, gegebenenfalls substituierter aliphatischer Rest ist, wobei der gegebenenfalls substituierte aliphatische Rest zusätzlich mindestens eine Gruppe ausgewählt aus Ether, Thioether, gegebenenfalls nitroxylierter Aminoether, Carbonylgruppe, Carbonsäureestergruppe, Carbonsäureamidgruppe, Sulfonsäureestergruppe, Phosphorsäureester aufweisen kann,
   und wobei "&&" für Y die Bindung bezeichnet, über die Y mit X verknüpft ist und wobei "&" für Y die Bindung bezeichnet, über die Y mit dem Kohlenstoffatom, welches mit R⁵ verknüpft ist, verknüpft ist.
2) In einer besonderen Ausführungsform der vorliegenden Erfindung betrifft diese ein Verfahren zur Herstellung eines Polymers **P¹** umfassend n¹ Wiederholungseinheiten der allgemeinen chemischen Struktur **(I)** mit 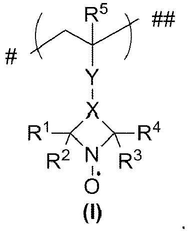 welches dadurch gekennzeichnet ist, dass man ein Polymer **P²** umfassend n² Wiederholungseinheiten der allgemeinen chemischen Struktur **(II)** mit 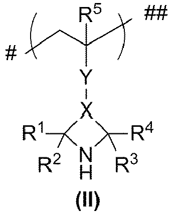
   in einem Lösungsmittel umfassend Wasser und Ethanol, wobei im Lösungsmittel das Ethanol im Unterschuss bezogen auf Wasser vorliegt, wobei das Massenverhältnis von Wasser zu Ethanol im Lösungsmittel im Bereich 51 : 49 bis 99 : 1 liegt, insbesondere bei einer Temperatur **T**₁ ≤ 40 °C, oxidiert,
   wobei n¹, n² unabhängig voneinander jeweils eine ganze Zahl im Bereich von 4 - 3000000, insbesondere 4 - 1000000, bevorzugt 4 - 100000, bevorzugter 4 - 10000, noch bevorzugter 4 - 5000 ist,
   wobei die Wiederholungseinheiten der chemischen Struktur **(I)** innerhalb des Polymers **P¹** gleich oder zumindest teilweise voneinander verschieden sind,
   wobei die Wiederholungseinheiten der chemischen Struktur **(I)** innerhalb des Polymers **P¹** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
   wobei die Wiederholungseinheiten der chemischen Struktur **(II)** innerhalb des Polymers **P²** gleich oder zumindest teilweise voneinander verschieden sind,
   wobei die Wiederholungseinheiten der chemischen Struktur **(II)** innerhalb des Polymers **P²** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
   und wobei in den chemischen Strukturen **(I)** und **(II)** die Reste R¹, R², R³, R⁴, R⁵ ausgewählt sind aus der Gruppe bestehend aus Wasserstoff, verzweigte oder unverzweigte Alkylgruppe mit 1 bis 4 Kohlenstoffatomen, bevorzugt R¹, R², R³, R⁴ = Methyl und R⁵ = Wasserstoff oder Methyl,
   X ausgewählt ist aus der Gruppe bestehend aus *-CH₂-**C**'H-CH₂-**,*-**C**'H-CH₂-**, *-**C**'=CH-**,
   wobei "*" jeweils die Bindung zu dem mit R¹ und R² verknüpften Kohlenstoffatom bezeichnet,
   wobei "**" jeweils die Bindung zu dem mit R³ und R⁴ verknüpften Kohlenstoffatom bezeichnet,
   wobei "**C'**" ein Kohlenstoffatom bezeichnet, das zusätzlich mit dem Rest Y verknüpft ist,
   wobei Y ausgewählt aus den verbrückenden Resten **(III)** und **(IV)** ist,
      wobei **(III)** die Struktur &-(Y¹)ₚ₁-[C=X¹]ₚ₂-(Y²)ₚ₃-B-(Y³)ₚ₆-[C=X²]ₚ₅-(Y⁴)ₚ₄-&& aufweist,
      und wobei **(IV)** die Struktur &-(Y⁵)ₚ₉-(C=X³)ₚ₈ -(Y⁶)ₚ₇-&& aufweist,
      wobei in den verbrückenden Resten **(III)** und **(IV)**
      p1, p2, p3 jeweils 0 oder 1 mit der Maßgabe, dass nicht gleichzeitig p1 = p3 = 1 und p2 = 0 ist, sind,
      p4, p5, p6 jeweils 0 oder 1 mit der Maßgabe, dass nicht gleichzeitig p4 = p6 = 1 und p5 = 0 ist, sind,
      p7, p8, p9 jeweils 0 oder 1 mit der Maßgabe, dass nicht gleichzeitig p7 = p9 = 1 und p8 = 0 ist, und dass, wenn p7 = 1 und p8 = 0, dann p9 = 0 ist, sind,
      X¹, X², X³, Y¹, Y², Y³, Y⁴, Y⁵, Y⁶ unabhängig voneinander ausgewählt aus der Gruppe bestehend aus O, S sind,
      B ein zweiwertiger, gegebenenfalls substituierter (hetero)aromatischer Rest oder ein zweiwertiger, gegebenenfalls substituierter aliphatischer Rest ist, wobei der gegebenenfalls substituierte aliphatische Rest zusätzlich mindestens eine Gruppe ausgewählt aus Ether, Thioether, Carbonylgruppe, Carbonsäureestergruppe, Sulfonsäureestergruppe, Phosphorsäureester aufweisen kann,
   und wobei "&&" für Y die Bindung bezeichnet, über die Y mit X verknüpft ist und wobei "&" für Y die Bindung bezeichnet, über die Y mit dem Kohlenstoffatom, welches mit R⁵ verknüpft ist, verknüpft ist.
3) In einer bevorzugten Ausführungsform der vorliegenden Erfindung betrifft diese ein Verfahren zur Herstellung eines Polymers **P¹** umfassend n¹ Wiederholungseinheiten der allgemeinen chemischen Struktur **(I)** mit 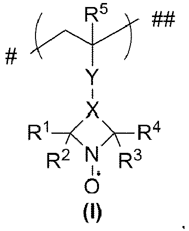 welches dadurch gekennzeichnet ist, dass man ein Polymer **P²** umfassend n² Wiederholungseinheiten der allgemeinen chemischen Struktur **(II)** mit 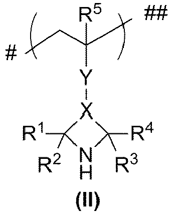
   in einem Lösungsmittel umfassend Wasser und Ethanol, wobei im Lösungsmittel das Ethanol im Unterschuss bezogen auf Wasser vorliegt, wobei das Massenverhältnis von Wasser zu Ethanol im Lösungsmittel im Bereich 51 : 49 bis 99 : 1 liegt, insbesondere bei einer Temperatur **T₁** ≤ 40 °C, oxidiert,
   wobei n¹, n² unabhängig voneinander jeweils eine ganze Zahl im Bereich von 4 - 3000000, insbesondere 4 - 1000000, bevorzugt 4 - 100000, bevorzugter 4 - 10000, noch bevorzugter 4 - 5000 ist,
   wobei die Wiederholungseinheiten der chemischen Struktur **(I)** innerhalb des Polymers **P¹** gleich oder zumindest teilweise voneinander verschieden sind,
   wobei die Wiederholungseinheiten der chemischen Struktur **(I)** innerhalb des Polymers **P¹** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
   wobei die Wiederholungseinheiten der chemischen Struktur **(II)** innerhalb des Polymers **P²** gleich oder zumindest teilweise voneinander verschieden sind,
   wobei die Wiederholungseinheiten der chemischen Struktur **(II)** innerhalb des Polymers **P²** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
   und wobei in den chemischen Strukturen **(I)** und **(II)** R¹ = R² = R³ = R⁴ = Methyl und R⁵ = Wasserstoff oder Methyl,
   X ausgewählt ist aus der Gruppe bestehend aus *-CH₂-**C**'H-CH₂-**,*-**C**'H-CH₂-**, *-**C**'=CH-**,
   wobei "*" jeweils die Bindung zu dem mit R¹ und R² verknüpften Kohlenstoffatom bezeichnet,
   wobei "**" jeweils die Bindung zu dem mit R³ und R⁴ verknüpften Kohlenstoffatom bezeichnet,
   wobei "**C'**" ein Kohlenstoffatom bezeichnet, das zusätzlich mit dem Rest Y verknüpft ist,
   wobei Y ausgewählt aus den verbrückenden Resten **(III)** und **(IV)** ist,
      wobei **(III)** die Struktur &-(Y¹)ₚ₁-[C=X¹]ₚ₂-(Y²)ₚ₃-B-(Y³)ₚ₆-[C=X²]ₚ₅-(Y⁴)ₚ₄-&& aufweist,
      und wobei **(IV)** die Struktur &-(Y⁵)ₚ₉-(C=X³)ₚ₈ -(Y⁶)ₚ₇-&& aufweist,
      wobei in den verbrückenden Resten **(III)** und **(IV)**
      p1, p2, p3 jeweils 0 oder 1 mit der Maßgabe, dass nicht gleichzeitig p1 = p3 = 1 und p2 = 0 ist, sind,
      p4, p5, p6 jeweils 0 oder 1 mit der Maßgabe, dass nicht gleichzeitig p4 = p6 = 1 und p5 = 0 ist, sind,
      p7, p8, p9 jeweils 0 oder 1 mit der Maßgabe, dass nicht gleichzeitig p7 = p9 = 1 und p8 = 0 ist, und dass, wenn p7 = 1 und p8 = 0, dann p9 = 0 ist, sind,
      X¹, X², X³, Y¹, Y², Y³, Y⁴, Y⁵, Y⁶ unabhängig voneinander ausgewählt aus der Gruppe bestehend aus O, S sind,
      B ein zweiwertiger (hetero)aromatischer Rest, bevorzugt Phenylen, oder ein zweiwertiger, gegebenenfalls mit mindestens einer Gruppe ausgewählt aus -F, -Cl, -Br, -I substituierter aliphatischer Rest ist, wobei der gegebenenfalls substituierte aliphatische Rest zusätzlich mindestens eine Gruppe ausgewählt aus Ether, Thioether aufweisen kann,
   und wobei "&&" für Y die Bindung bezeichnet, über die Y mit X verknüpft ist und wobei "&" für Y die Bindung bezeichnet, über die Y mit dem Kohlenstoffatom, welches mit R⁵ verknüpft ist, verknüpft ist.
4) In einer bevorzugteren Ausführungsform der vorliegenden Erfindung betrifft diese ein Verfahren zur Herstellung eines Polymers **P¹** umfassend n¹ Wiederholungseinheiten der allgemeinen chemischen Struktur **(I)** mit 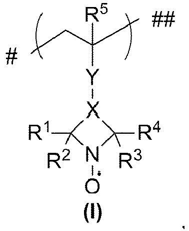 welches dadurch gekennzeichnet ist, dass man ein Polymer **P²** umfassend n² Wiederholungseinheiten der allgemeinen chemischen Struktur **(II)** mit 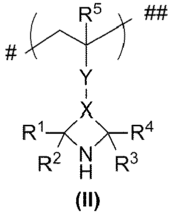
   in einem Lösungsmittel umfassend Wasser und Ethanol, wobei im Lösungsmittel das Ethanol im Unterschuss bezogen auf Wasser vorliegt, wobei das Massenverhältnis von Wasser zu Ethanol im Lösungsmittel im Bereich 51 : 49 bis 99 : 1 liegt, insbesondere bei einer Temperatur **T₁** ≤ 40 °C, oxidiert,
   wobei n¹, n² unabhängig voneinander jeweils eine ganze Zahl im Bereich von 4 - 3000000, insbesondere 4 - 1000000, bevorzugt 4 - 100000, bevorzugter 4 - 10000, noch bevorzugter 4 - 5000 ist,
   wobei die Wiederholungseinheiten der chemischen Struktur **(I)** innerhalb des Polymers **P¹** gleich oder zumindest teilweise voneinander verschieden sind,
   wobei die Wiederholungseinheiten der chemischen Struktur **(I)** innerhalb des Polymers **P¹** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
   wobei die Wiederholungseinheiten der chemischen Struktur **(II)** innerhalb des Polymers **P²** gleich oder zumindest teilweise voneinander verschieden sind,
   wobei die Wiederholungseinheiten der chemischen Struktur **(II)** innerhalb des Polymers **P²** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
   und wobei in den chemischen Strukturen **(I)** und **(II)** R¹ = R² = R³ = R⁴ = Methyl und R⁵ = Wasserstoff oder Methyl,
   X ausgewählt ist aus der Gruppe bestehend aus *-CH₂-**C'**H-CH₂-**,*-**C'**H-CH₂-**, *-**C'**=CH-**,
   wobei "*" jeweils die Bindung zu dem mit R¹ und R² verknüpften Kohlenstoffatom bezeichnet,
   wobei "**" jeweils die Bindung zu dem mit R³ und R⁴ verknüpften Kohlenstoffatom bezeichnet,
   wobei "**C'**" ein Kohlenstoffatom bezeichnet, das zusätzlich mit dem Rest Y verknüpft ist,
   wobei Y ausgewählt aus den verbrückenden Resten **(III)** und **(IV)** ist,
      wobei **(III)** die Struktur &-(Y¹)ₚ₁-[C=X¹]ₚ₂-(Y²)ₚ₃-B-(Y³)ₚ₆-[C=X²]ₚ₅-(Y⁴)ₚ₄-&& aufweist,
      und wobei **(IV)** die Struktur &-(Y⁵)ₚ₉-(C=X³)ₚ₈-(Y⁶)ₚ₇-&& aufweist,
      wobei in den verbrückenden Resten **(III)** und **(IV)**
      p1, p2, p3 jeweils 0 oder 1 mit der Maßgabe, dass nicht gleichzeitig p1 = p3 = 1 und p2 = 0 ist, sind,
      p4, p5, p6 jeweils 0 oder 1 mit der Maßgabe, dass nicht gleichzeitig p4 = p6 = 1 und p5 = 0 ist, sind,
      p7, p8, p9 jeweils 0 oder 1 mit der Maßgabe, dass nicht gleichzeitig p7 = p9 = 1 und p8 = 0 ist, und dass, wenn p7 = 1 und p8 = 0, dann p9 = 0 ist, sind,
      X¹ = X² = X³ = Y¹ = Y² = Y³ = Y⁴ = Y⁵ = Y⁶ = O sind,
      B Phenylen, oder ein gegebenenfalls mit mindestens einer Gruppe ausgewählt aus -F, -Cl, -Br, -I substituierter, bevorzugt unsubstituierter, Alkylenrest, welcher bevorzugt 1 bis 10 Kohlenstoffatome umfasst, ist,
   und wobei "&&" für Y die Bindung bezeichnet, über die Y mit X verknüpft ist und wobei "&" für Y die Bindung bezeichnet, über die Y mit dem Kohlenstoffatom, welches mit R⁵ verknüpft ist, verknüpft ist.

In den unter den Punkten 1) bis 4) beschriebenen Ausführungsformen ist X ausgewählt aus der Gruppe bestehend aus *-CH₂-**C**'H-CH₂-**,*-**C**'H-CH₂-**, *-**C**'=CH-**.

Wenn X = *-CH₂-**C**'H-CH₂-** ist, dann hat die allgemeine chemische Struktur **(I)** folgende Struktur **(I)**', und die allgemeine chemische Struktur **(II)** hat die folgende Struktur **(II)**': 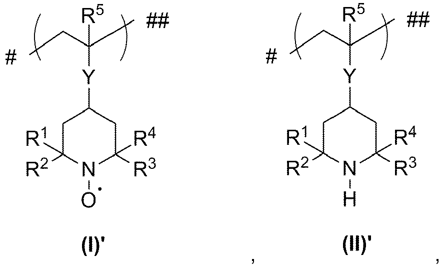 wobei R¹, R², R³, R⁴, R⁵, Y die in der jeweiligen Ausführungsform beschriebenen Bedeutungen haben.

Wenn X = *-**C**'H-CH₂-** ist, dann hat die allgemeine chemische Struktur **(I)** folgende Struktur **(I)**", und die allgemeine chemische Struktur **(II)** hat die folgende Struktur **(II)**": 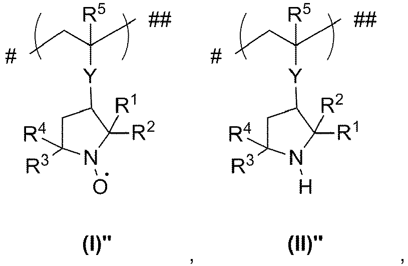 wobei R¹, R², R³, R⁴, R⁵, Y die in der jeweiligen Ausführungsform beschriebenen Bedeutungen haben.

Wenn X = *-**C**'=CH₂-** ist, dann hat die allgemeine chemische Struktur **(I)** folgende Struktur **(I)**'", und die allgemeine chemische Struktur **(II)** hat die folgende Struktur **(II)**'": 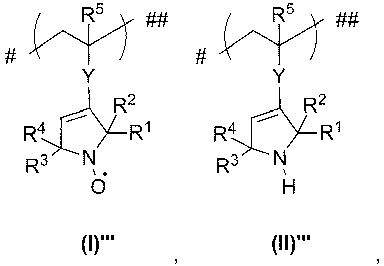 wobei R¹, R², R³, R⁴, R⁵, Y die in der jeweiligen Ausführungsform beschriebenen Bedeutungen haben.

Dabei ist es erfindungsgemäß und insbesondere bei den unter den Punkten 1) bis 4) genannten Ausführungsformen besonders bevorzugt, wenn X = *-CH₂-**C**'H-CH₂-**.

Am bevorzugtesten hat im erfindungsgemäßen Verfahren die allgemeine chemische Struktur **(I)** folgende Struktur **(I)**"", und die allgemeine chemische Struktur **(II)** folgende Struktur **(II)**"": 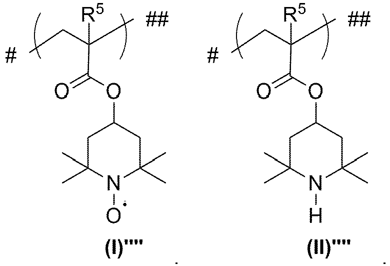 wobei R⁵ = Methyl oder Wasserstoff, bevorzugt R⁵ = Methyl.

Es versteht sich von selbst, dass der verbrückende Rest **(IV)** für p7 = p8 = p9 = 0 auch eine direkte Bindung sein kann.

Das erfindungsgemäße Verfahren zeichnet sich insbesondere dadurch aus, dass man es bei einer Temperatur **T₁** ≤ 40 °C, bevorzugt - 25 °C ≤ **T₁** ≤ 40 °C, bevorzugter - 20 °C ≤ **T₁** ≤ 40 °C, noch bevorzugter - 12 °C ≤ **T₁** ≤ 30 °C, noch mehr bevorzugter 0 °C ≤ **T₁** ≤ 25 °C durchführt.

"Wobei im Lösungsmittel das Ethanol im Unterschuss bezogen auf Wasser vorliegt" bedeutet dabei, dass das Massenverhältnis von Wasser zu Ethanol im Lösungsmittel im Bereich 51 : 49 bis 99 : 1, bevorzugt im Bereich 1.1 : 1 bis 98 : 2, bevorzugter im Bereich 55 : 45 bis 95 : 5, noch bevorzugter im Bereich 1.3 : 1 bis 9 :1, noch mehr bevorzugter im Bereich 4 : 1 bis 8.5 :1, am bevorzugtesten im Bereich 7.1 : 1 bis 8.2 : 1 liegt.

Es ist weiterhin bevorzugt, dass der Anteil der Summe der Gewichte von Ethanol und Wasser im Lösungsmittel mindestens 50 Gew.-%, bevorzugter mindestens 60 Gew.-%, noch bevorzugter mindestens 70 Gew.-%, noch mehr bevorzugter mindestens 80 Gew.-%, noch mehr bevorzugter mindestens 90 Gew.-%, noch viel mehr bevorzugter mindestens 95 Gew.-% am bevorzugtesten mindestens 99 Gew.-%, bezogen auf das Gesamtgewicht des Lösungsmittels, beträgt.

Das Lösungsmittel kann neben Wasser und Ethanol weitere Bestandteile aufweisen, insbesondere ausgewählt aus der Gruppe bestehend aus halogenierte Kohlenwasserstoffe, aliphatische Nitrile, aromatische Nitrile, von Ethanol verschiedene Alkohole, aromatische Kohlenwasserstoffe.

Es ist jedoch bevorzugt, dass der Gewichtsanteil aller von Ethanol verschiedener C₁ - C₄-Alkohole im Lösungsmittel, bevorzugter aller von Ethanol verschiedener C₁ - C₁₀-Alkohole im Lösungsmittel, weniger als 50 Gew.-%, bezogen auf das Gewicht des vom Lösungsmittel umfassten Ethanols beträgt.

Es ist bevorzugter, dass der Gewichtsanteil aller von Ethanol verschiedener C₁ - C₄-Alkohole im Lösungsmittel, bevorzugter aller von Ethanol verschiedener C₁ - C₁₀-Alkohole im Lösungsmittel, weniger als 25 Gew.-%, bezogen auf das Gewicht des vom Lösungsmittel umfassten Ethanols beträgt.

Es ist noch bevorzugter, dass der Gewichtsanteil aller von Ethanol verschiedener C₁ - C₄-Alkohole im Lösungsmittel, bevorzugter aller von Ethanol verschiedener C₁ - C₁₀- Alkohole im Lösungsmittel, weniger als 10 Gew.-%, bezogen auf das Gewicht des vom Lösungsmittel umfassten Ethanols beträgt.

Es ist noch mehr bevorzugter, dass der Gewichtsanteil aller von Ethanol verschiedener C₁ - C₄-Alkohole im Lösungsmittel, bevorzugter aller von Ethanol verschiedener C₁ - C₁₀-Alkohole im Lösungsmittel, weniger als 5 Gew.-%, bezogen auf das Gewicht des vom Lösungsmittel umfassten Ethanols beträgt.

Es ist noch viel mehr bevorzugter, dass der Gewichtsanteil aller von Ethanol verschiedener C₁ - C₄-Alkohole im Lösungsmittel, bevorzugter aller von Ethanol verschiedener C₁ - C₁₀-Alkohole im Lösungsmittel, weniger als 1 Gew.-%, bezogen auf das Gewicht des vom Lösungsmittel umfassten Ethanols beträgt.

Das Lösungsmittel wird insbesondere in einer solchen Menge eingesetzt, dass das Gewicht des eingesetzten Lösungsmittels das 1 bis 5000-fache, bevorzugt 2.5 bis 3000-fache, bevorzugter 5 bis 100-fache, noch bevorzugter 10 - 50 des Gewichts des eingesetzten Polymers **P²** beträgt.

Als Oxidationsmittel können ebenfalls die dem Fachmann geläufigen Oxidationsmittel eingesetzt werden. Das Oxidationsmittel ist insbesondere ausgewählt aus der Gruppe bestehend aus Peroxiden, Metallverbindungen, Luft, bevorzugt Peroxide.

Peroxide sind bevorzugt ausgewählt aus der Gruppe bestehend aus Wasserstoffperoxid, Perameisensäure, Peressigsäure, Perbenzoesäure, Perphthalsäure, *meta*-Chlorperbenzoesäure Bevorzugtestes Peroxid ist Wasserstoffperoxid.

Metallverbindungen sind bevorzugt ausgewählt aus der Gruppe bestehend aus Silberoxid, Bleitetraacetat, Kaliumhexacyanoferrat(III), Kaliumpermanganat.

Das im erfindungsgemäßen Verfahren verwendete Edukt **P²** kann mit Methoden des Standes der Technik aus handelsüblichen Chemikalien wie zum Beispiel 2,2,6,6-Tetramethyl-4-piperidinylmethacrylat gewonnen werden. Solche Verfahren sind beispielsweise in der EP 1 752 474 A1 oder in der europäischen Patentanmeldung mit Anmeldenummer 16172593.2 beschrieben. Es können demnach bei der Synthese von **P²** neben dem Monomer auch zusätzlich Vernetzer eingesetzt werden. Als Vernetzer eignen sich Verbindungen welche mehr als eine polymerisierbare Gruppe aufweisen, bevorzugt ist der Vernetzer ausgewählt aus der Gruppe bestehend aus polyfunktionelle Verbindungen basierend auf (Meth)acrylsäure, polyfunktionelle Verbindungen basierend auf Allylether, polyfunktionelle Verbindungen basierend auf vinylischen Verbindungen. Polyfunktionelle Verbindungen basierend auf (Meth)acrylsäure sind dabei besonders bevorzugt.
Polyfunktionelle Verbindungen basierend auf (Meth)acrylsäure sind insbesondere ausgewählt aus Ethylenglykoldi(meth)acrylat, Diethylenglykoldi(meth)acrylat, Triethylenglykoldi(meth)acrylat, Polyethylenglykoldi(meth)acrylat, 1,3-Propandioldi(meth)acrylat, 2,3-Butandioldi(meth)acrylat, 1,4-Butandioldi(meth)acrylat,1,5-Pentandioldi(meth)acrylat, 1,6-Hexandioldi(meth)acrylat, 1,7-Heptandioldi(meth)acrylat, 1,8-Oktandioldi(meth)acrylat, 1,9-Nonandioldi(meth)acrylat, 1,10-Dekandioldi(meth)acrylat, Trimethylolpropantri(meth)acrylat, Glyceroldi(meth)acrylat, 2-Hydroxy-3-(meth)acryloxypropyl(meth)acrylat.

Das Oxidationsmittel wird insbesondere in einer solchen Menge eingesetzt, dass pro Mol NH-Gruppe im eingesetzten Polymer **P²**, welche oxidiert werden soll, 1 bis 40 mol, bevorzugter 1.5 bis 15 mol, noch bevorzugter 5 bis 14.4 mol, noch mehr bevorzugter 13 bis 14 mol, am bevorzugtesten 13 mol des Oxidationsmittels eingesetzt werden.

In der Oxidation kann außerdem auch ein Katalysator genutzt werden. Die in der Nitroxylierung eingesetzten Katalysatoren sind dem Fachmann geläufig.

Insbesondere können zur Nitroxylierung Katalysatoren ausgewählt aus Verbindungen der Metalle der Chromgruppe, insbesondere Molybdän und Wolfram eingesetzt werden. Bevorzugt ist der zur Nitroxylierung eingesetzte Katalysator eine Verbindung des Wolframs.

Verbindungen des Wolframs sind insbesondere ausgewählt aus der Gruppe bestehend aus Wolframsäure, Wolframatophosphorsäure, Parawolframsäure, Wolframate, Wolframatophosphate, Parawolframate, Wolframoxide, Wolframcarbonyle. Bevorzugt sind Verbindungen des Wolframs erfindungsgemäß ausgewählt aus Alkalimetallsalzen und Ammoniumsalzen der Wolframate, bevorzugter aus der Gruppe bestehend aus Ammoniumwolframat, Natriumwolframat, Kaliumwolframat, noch bevorzugter Natriumwolframat.

Verbindungen des Molybdäns sind insbesondere ausgewählt aus der Gruppe bestehend aus Molybdänsäure, Molybdänophosphorsäure, Paramolybdänsäure, Molybdate, Molybdänophosphate, Paramolybdate, Molybdänoxide, Molybdäncarbonyle. Bevorzugt sind Verbindungen des Molybdäns erfindungsgemäß ausgewählt aus Alkalimetallsalzen und Ammoniumsalzen der Molybdate, bevorzugter aus der Gruppe bestehend aus Ammoniummolybdat, Natriummolybdat, Kaliummolybdat, Molybdäntrioxid, Molybdänhexacarbonyl.

Der Katalysator wird insbesondere in einer solchen Menge eingesetzt, dass pro Mol der in Schritt (a) des erfindungsgemäßen Verfahrens eingesetzten Verbindung der Struktur **(II)** 0.1 bis 10 mol-%, bevorzugter 1 bis 5 mol-%, noch bevorzugter 2 bis 3.5 mol-%, noch mehr bevorzugter 2.5 bis 3.0 mol-% des Katalysators eingesetzt werden.

Die Reaktionsdauer ist ebenso wenig besonders beschränkt, und liegt insbesondere bei 1 bis 100, bevorzugt 3 bis 96 Stunden, noch bevorzugter 10 bis 96 Stunden, noch mehr bevorzugter 25 bis 96 Stunden, noch viel mehr bevorzugter 72 bis 96 Stunden, am bevorzugtesten 90 bis 96 Stunden.

Die Isolierung des erhaltenen Polymers **P¹** erfolgt dann ebenfalls mit dem Fachmann geläufigen Methoden, wie Filtration und anschließende Trocknung.

Die Endgruppen der ersten Wiederholungseinheit des Polymers **P¹**, welche sich für dieses in der chemischen Struktur **(I)** an den durch "#" definierten Bindungen befindet, sowie die Endgruppen der n¹-ten Wiederholungseinheit des erfindungsgemäßen Polymers **P¹**, welche sich für diese in der chemischen Struktur **(I)** an den durch "# #" definierten Bindungen befindet, sind nicht besonders beschränkt und ergeben sich aus der bei der Herstellungsmethode des Polymers **P¹** verwendeten Polymerisationsmethode. So kann es sich dabei um Abbruchfragmente eines Initiators oder einer Wiederholungseinheit handeln. Bevorzugt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher bevorzugt Phenylrest, Benzylrest oder α-Hydroxybenzyl ist.

Die Endgruppen der ersten Wiederholungseinheit des Polymers **P²**, welche sich für dieses in der chemischen Struktur **(II)** an den durch "#"definierten Bindungen befindet, sowie die Endgruppen der n²-ten Wiederholungseinheit des erfindungsgemäßen Polymers **P²**, welche sich für diese in der chemischen Struktur **(II)** an den durch "# #" definierten Bindungen befindet, sind nicht besonders beschränkt und ergeben sich aus der bei der Herstellungsmethode des Polymers **P²** verwendeten Polymerisationsmethode. So kann es sich dabei um Abbruchfragmente eines Initiators oder einer Wiederholungseinheit handeln. Bevorzugt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher bevorzugt Phenylrest, Benzylrest oder α-Hydroxybenzyl ist.

### Definitionen

Im Rahmen dieser Erfindung werden einige Begriffe wie folgt definiert:
"Nitroxyl" ist eine radikalische N O• - Funktion.

Nitroxylierung ist die Oxidation einer NH-Gruppe in ein Nitroxyl.

"Zumindest teilweise voneinander verschieden" bedeutet im Sinne der Erfindung mit Bezug auf das Polymer **P¹**, dass sich in diesem mindestens zwei Wiederholungseinheiten der chemischen Struktur **(I)** voneinander unterscheiden, insbesondere bedeutet dies, dass sich mindestens zwei der n miteinander verknüpften Wiederholungseinheiten der chemischen Struktur **(I)** in mindestens einem der Reste R¹, R², R³, R⁴, R⁵, X, Y unterscheiden.

"Zumindest teilweise voneinander verschieden" bedeutet im Sinne der Erfindung mit Bezug auf das Polymer **P²**, dass sich in diesem mindestens zwei Wiederholungseinheiten der chemischen Struktur **(II)** voneinander unterscheiden, insbesondere bedeutet dies, dass sich mindestens zwei der n miteinander verknüpften Wiederholungseinheiten der chemischen Struktur **(II)** in mindestens einem der Reste R¹, R², R³, R⁴, R⁵, X, Y unterscheiden.

Der "Oxidationsgrad" des Polymers **P¹** (wie auch gegebenenfalls des Polymers **P²**) bedeutet den Anteil an Nitroxylgruppen bezogen auf die Summe aller Nitroxylgruppen und nicht nitroxylierten sekundären NH-Gruppen. Er wird erfindungsgemäß mit ESR bestimmt. Dabei wird über die Signalstärke des gemessenen ESR-Signals bezogen auf die eingesetzte Menge des jeweiligen Polymers bestimmt, wie viele NO• - Funktionen im jeweils untersuchten Molekül vorliegen. Als Standard wird erfindungsgemäß TEMPO (2,2,6,6,-Tetramethylpiperidinyl-*N*-oxyl) eingesetzt. Über die Ermittlung der Anzahl der N-O• - Funktionen im Polymer **P¹** und den Vergleich der NO•-Funktionen im eingesetzten Polymer **P²** kann dann der Oxidationsgrad und somit die Effizienz des erfindungsgemäßen Verfahrens bestimmt werden.

"Halogenierte Kohlenwasserstoffe" sind bevorzugt ausgewählt aus der Gruppe bestehend aus Dichlormethan, Chloroform, Dichlorethan. Aliphatische Nitrile sind bevorzugt ausgewählt aus der Gruppe bestehend aus Acetonitril, Proprionitril, Butyronitril. Aromatische Nitrile sind bevorzugt ausgewählt aus der Gruppe bestehend aus Benzonitril, Phenylacetonitril. Von Ethanol verschiedene Alkohole sind bevorzugt ausgewählt aus der Gruppe bestehend aus Methanol, *n*-Propanol, *iso*-Propanol, *n*-Butanol, *sec*-Butanol, *iso*-Butanol, *tert*-Butanol, bevorzugt Methanol. Aromatische Kohlenwasserstoffe sind bevorzugt ausgewählt aus der Gruppe bestehend aus Benzol, Toluol.

"C₁ - C₄ - Alkohole" sind erfindungsgemäß insbesondere Methanol, Ethanol, *n*-Propanol, *iso-*Propanol, *n*-Butanol, *sec*-Butanol, *iso*-Butanol, *tert*-Butanol.

"C₁ - C₁₀ - Alkohole" sind erfindungsgemäß insbesondere Methanol, Ethanol, *n*-Propanol, *iso-*Propanol, *n*-Butanol, *sec*-Butanol, *iso*-Butanol, *tert*-Butanol und alle Alkohole mit 5 bis 10 Kohlenstoffatomen.

"Substituierter aliphatischer Rest" bedeutet im Sinne der Erfindung insbesondere, dass in dem betreffenden aliphatischen Rest ein an ein Kohlenstoffatom gebundenes Wasserstoffatom der betreffenden Gruppe durch eine Gruppe ausgewählt aus (hetero)aromatischer Rest, -NO₂, -CN, -F, -Cl, -Br, -I, -C(=O)NR^{I}R^{II}, -NR^{III}R^{IV}, -C(=O)OR^{V} bevorzugt -NO₂, -CN, -F, -Cl, -Br, -I, noch bevorzugter -F, -Cl, -Br, -I, am bevorzugtesten -F, -Cl, -Br ersetzt ist, wobei R^{I}, R^{II}, R^{III}, R^{IV}, R^{V} ausgewählt sind aus H, Alkyl, Haloalkyl, Aromat, Heteroaromat, und wobei R^{III} im Falle dass R^{IV} = Alkyl oder Haloalkyl auch = -O· sein kann.

Ein gegebenenfalls substituierter aliphatischer Rest ist bevorzugt unsubstituiert.

Ein gegebenenfalls substituierter Alkylenrest ist bevorzugt unsubstituiert.

Ein Alkylenrest mit 1 bis 10 Kohlenstoffatomen weist insbesondere 1 bis 6 Kohlenstoffatome, bevorzugt 1 bis 4 Kohlenstoffatome, noch bevorzugter 1 bis 3 Kohlenstoffatome auf und ist am bevorzugtesten Methylen, Ethylen oder *n*-Propylen.

Eine Alkylgruppe mit 1 bis 10 Kohlenstoffatomen weist insbesondere 1 bis 6 Kohlenstoffatome, bevorzugt 1 bis 4 Kohlenstoffatome, noch bevorzugter 1 bis 3 Kohlenstoffatome auf und ist am bevorzugtesten Methyl, Ethyl oder *n*-Propyl.

Ein (hetero)aromatischer Rest ist im Sinne der Erfindung ein heteroaromatischer oder ein aromatischer Rest. Ein (hetero)aromatischer Rest kann einwertig sein, das heißt nur über eines seiner Kohlenstoffatome (im Falle eines aromatischen Rests) bzw. über eines seiner Kohlenstoff- oder Heteroatome (im Falle eines heteroaromatischen Restes) mit dem restlichen Molekül verbunden sein.

Ein (hetero)aromatischer Rest kann alternativ zweiwertig sein, das heißt über zwei seiner Kohlenstoffatome mit dem restlichen Molekül verbunden sein (im Falle eines aromatischen Rests) bzw. über zwei seiner Kohlenstoffatome, zwei seiner Heteroatome oder eines seiner Kohlenstoffatome und eines seiner Heteroatome (im Falle eines heteroaromatischen Restes) mit dem restlichen Molekül verbunden sein.

Wenn in dieser Erfindung nicht explizit als zweiwertig bezeichnet, sind unter der Bezeichnung "(hetero)aromatischer Rest" im Sinne der Erfindung einwertige (hetero)aromatische Reste zu verstehen.

Ein aromatischer Rest weist ausschließlich Kohlenstoffatome und mindestens einen aromatischen Ring auf. Ein aromatischer Rest ist insbesondere ausgewählt aus Arylrest, Aralkylrest, Alkarylrest.

Arylreste weisen ausschließlich aromatische Ringe auf und sind über ein Kohlenstoffatom des aromatischen Ringes mit dem Molekül verknüpft. Bevorzugt ist ein Arylrest Phenyl.

Alkarylreste weisen mindestens einen aromatischen Ring auf, über welchen sie mit dem restlichen Molekül verknüpft sind und tragen daneben auch Alkylreste am aromatischen Ring. Bevorzugt ist ein Alkarylrest Tolyl.

Aralkylreste gehen formal durch Substitution eines Wasserstoffrestes einer Alkylgruppe mit einer Arylgruppe oder einer Alkarylgruppe hervor. Bevorzugt ist ein Aralkylrest Benzyl, Phenylethyl, α-Methylbenzyl.

Ein heteroaromatischer Rest ist insbesondere ausgewählt aus Hetero-Arylrest, Hetero-Aralkylrest, Alkylheteroarylrest. Es ist ein aromatischer Rest, der zusätzlich mindestens ein Heteroatom, insbesondere ein Heteroatom ausgewählt aus der Gruppe bestehend aus Stickstoff, Sauerstoff, Schwefel innerhalb des aromatischen Ringes, oder, im Falle eines Hetero-Aralkylrests oder eines Alkylheteroarylrestes, alternativ oder zusätzlich außerhalb des aromatischen Ringes aufweist.

Bevorzugte (hetero)aromatische Reste sind ausgewählt aus der Gruppe bestehend aus einem Ring der vorstehend definierten chemischen Struktur **(III)**, Azol, Imidazol, Pyrrol, Pyrazol, Triazol, Tetrazol, Thiophen, Furan, Thiazol, Thiadiazol, Oxazol, Oxadiazole, Pyridin, Pyrimidin, Triazin, Tetrazin, Thiazine, Benzofuran, Purin, Indol, 9-Anthryl, 9-Phenanthryl.

Ein zweiwertiger (hetero)aromatischer Rest ist im Sinne der Erfindung ein zweiwertiger aromatischer Rest oder ein zweiwertiger heteroaromatischer Rest, bevorzugt ein zweiwertiger aromatischer Rest.

Ein zweiwertiger aromatischer Rest ist erfindungsgemäß eine zweiwertige Kohlenwasserstoffgruppe mit mindestens 6, bevorzugt 6 bis 30, Kohlenstoffatomen, von denen mindestens 6 Kohlenstoffatome in einem aromatischen System vorliegen und die übrigen Kohlenstoffatome, falls vorhanden, gesättigt sind. Der zweiwertige aromatische Rest kann über Kohlenstoffatome des aromatischen Systems oder, falls vorhanden, gesättigte Kohlenstoffatome mit dem restlichen Molekül verknüpft sein.

Bevorzugt ist ein zweiwertiger aromatischer Rest eine chemische Struktur **(d)** mit 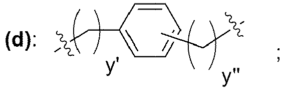 wobei y' eine ganze Zahl > 0, bevorzugt zwischen 0 und 24 ist; wobei y" eine ganze Zahl > 0, bevorzugt zwischen 0 und 24 ist; und wobei bevorzugt gleichzeitig gilt, dass y' + y" ≤ 24. Ein zweiwertiger heteroaromatischer Rest ist ein zweiwertiger aromatischer Rest, der zusätzlich mindestens ein Heteroatom, insbesondere mindestens ein Heteroatom ausgewählt aus der Gruppe bestehend aus Stickstoff, Sauerstoff, Schwefel innerhalb oder außerhalb des aromatischen Ringes, bevorzugt innerhalb des aromatischen Ringes, aufweist, aber insbesondere über Kohlenstoffatome mit dem restlichen Molekül verknüpft ist.

"Gegebenenfalls substituierter (hetero)aromatischer Rest" bedeutet insbesondere unsubstituierter (hetero)aromatischer Rest und bevorzugt unsubstituierter aromatischer Rest.

"Substituierter oder unsubstituierter (hetero)aromatischer Rest" bedeutet insbesondere unsubstituierter (hetero)aromatischer Rest und bevorzugt unsubstituierter aromatischer Rest. "Substituierter (hetero)aromatischer Rest" bedeutet im Sinne der Erfindung insbesondere, dass in dem betreffenden (hetero)aromatischer Rest ein an ein Kohlenstoffatom gebundenes Wasserstoffatom der betreffenden Gruppe durch eine Gruppe ausgewählt aus Alkylgruppe, Alkenylgruppe, Alkinylgruppe, Haloalkylgruppe, -NO₂, -CN, -F, -Cl, -Br, -I, -C(=O)NR^{I}R^{II}, -NR^{III}R^{V}, bevorzugt -NO₂, -CN, -F, -Cl, Alkylgruppe mit 1 bis 10 Kohlenstoffatomen, Alkenylgruppe mit 2 bis 10 Kohlenstoffatomen ersetzt ist, wobei R^{I}, R^{II}, R^{III}, R^{V} ausgewählt sind aus H, Alkylgruppe mit bevorzugt 1 bis 10 Kohlenstoffatomen, Alkenylgruppe mit 2 bis 10 Kohlenstoffatomen, Haloalkylgruppe mit bevorzugt 1 bis 10 Kohlenstoffatomen, Aromat, Heteroaromat, und wobei R^{III} im Falle dass R^{V} = Alkyl oder Haloalkyl auch = -O· sein kann.

"Wobei der gegebenenfalls substituierte aliphatische Rest zusätzlich mindestens eine Gruppe ausgewählt aus Ether, Thioether, gegebenenfalls nitroxylierter Aminoether, Carbonylgruppe, Carbonsäureestergruppe, Carbonsäureamidgruppe, Sulfonsäureestergruppe, Phosphorsäureester aufweisen kann" bedeutet:
Im Falle des Ethers, dass in dem gegebenenfalls substituierten aliphatischen Rest mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -O- Gruppe vorliegt.

Im Falle des Thioethers, dass in dem gegebenenfalls substituierten aliphatischen Rest mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -S- Gruppe vorliegt.

Im Falle des gegebenenfalls nitroxylierten Aminoethers, dass in dem gegebenenfalls substituierten aliphatischen Rest mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -NR'- Gruppe mit R' = H, -O· oder Alkyl mit 1 bis 10 Kohlenstoffatomen, bevorzugt R' = H, oder Alkyl mit 1 bis 10 Kohlenstoffatomen vorliegt.

Im Falle der Carbonylgruppe, dass in dem gegebenenfalls substituierten aliphatischen Rest mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -C(=O)- Gruppe vorliegt.

Im Falle der Carbonsäureestergruppe, dass in dem gegebenenfalls substituierten aliphatischen Rest mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -C(=O)-O- Gruppe vorliegt.

Im Falle der Carbonsäureamidgruppe, dass in dem gegebenenfalls substituierten aliphatischen Rest mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -C(=O)-NU- Gruppe mit U = H oder Alkyl mit 1 bis 10 Kohlenstoffatomen vorliegt.

Im Falle der Sulfonsäureestergruppe, dass in dem gegebenenfalls substituierten aliphatischen Rest mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine -S(O)₂O-Gruppe vorliegt.

Im Falle der Phosphorsäureestergruppe, dass in dem gegebenenfalls substituierten aliphatischen Rest mindestens zwischen zwei sp³-hybridisierten Kohlenstoffatomen des aliphatischen Restes, bevorzugt zwischen zwei -CH₂-Gruppen des aliphatischen Restes, noch bevorzugter zwischen zwei -CH₂CH₂-Gruppen des aliphatischen Restes, eine Gruppe ausgewählt aus -OP(=O)(O⁻(W^{d+})_{1/z})-O-, -OP(=O)(OR")-O- vorliegt, wobei R" = H oder Alkylgruppe mit 1 bis 10 Kohlenstoffatomen.

Dabei ist W^{d+} ausgewählt aus der Gruppe bestehend aus Alkalimetallkation, wobei das Alkalimetallkation bevorzugt aus der Gruppe bestehend aus Li⁺, Na⁺, K⁺ ausgewählt ist, Erdalkalimetallkation, wobei das Erdalkalimetallkation bevorzugt aus der Gruppe bestehend aus Mg²⁺, Ca²⁺ ausgewählt ist, Übergangsmetallkation, wobei das Übergangsmetallkation bevorzugt ausgewählt aus der Gruppe bestehend aus Eisenkation, Zinkkation, Quecksilberkation, Nickelkation, Cadmiumkation ist, Tetraalkylammoniumkation, Imidazoliumkation, Monoalkylimidazoliumkation, Dialkylimidazoliumkation, wobei die Alkylgruppen in dem Tetraalkylammoniumkation, Monoalkylimidazoliumkation, Dialkylimidazoliumkation unabhängig voneinander jeweils bevorzugt 1 bis 30 Kohlenstoffatome aufweisen ist. Außerdem gibt d die Zahl der positiven Ladungen von W^{d+} an.

Bevorzugt ist W^{d+} ausgewählt aus der Gruppe bestehend aus Li⁺, Na⁺, K⁺, Mg²⁺, Ca²⁺, Zn²⁺, Fe²⁺, Fe³⁺, Cd²⁺, Hg⁺, Hg²⁺, Ni²⁺, Ni³⁺, Ni⁴⁺ ist,
wobei d im Falle von Li⁺, Na⁺, K⁺, Hg⁺ jeweils = 1 ist,
wobei d im Falle von Mg²⁺, Ca²⁺, Zn²⁺, Cd²⁺, Hg²⁺, Ni²⁺, Fe²⁺ jeweils = 2 ist,
wobei d im Falle von Fe³⁺, Ni³⁺ = 3 ist,
wobei d im Falle von Ni⁴⁺ = 4 ist.

### Anwendungsgebiete des mit dem erfindungsgemäßen Verfahren hergestellten Polymers P¹

Das Polymer **P¹** eignet sich insbesondere zur Verwendung als redoxaktives Elektrodenmaterial in einem elektrischen Ladungsspeicher, bevorzugt zur Speicherung elektrischer Energie, und noch bevorzugter als positives Elektrodenelement.

Noch bevorzugter ist das redoxaktive Elektrodenmaterial dabei als mindestens teilweise Oberflächenbeschichtung von Elektrodenelementen für elektrische Ladungsspeicher, insbesondere Sekundärbatterien, ausgebildet. Elektrodenelemente umfassen dabei mindestens eine Oberflächenschicht und ein Substrat.
Ein redoxaktives Material zur Speicherung elektrischer Energie ist ein Material, welches elektrische Ladung beispielsweise durch Aufnahme bzw. Abgabe von Elektronen speichern und wieder abgeben kann. Dieses Material kann beispielsweise als aktives Elektrodenmaterial in einem elektrischen Ladungsspeicher eingesetzt werden. Solche elektrischen Ladungsspeicher zur Speicherung elektrischer Energie sind insbesondere aus der Gruppe bestehend aus Sekundärbatterien (oder auch "Akkumulatoren" genannt), Redox-Flowbatterien, Superkondensatoren ausgewählt und bevorzugt Sekundärbatterien.

Bevorzugt handelt es sich bei dem elektrischen Ladungsspeicher um eine Sekundärbatterie. Eine Sekundärbatterie umfasst eine negative und eine positive Elektrode, die durch einen Separator voneinander getrennt werden, sowie einem Elektrolyt, welcher die Elektroden und den Separator umschließt.

Der Separator ist eine poröse Schicht, die ionendurchlässig ist und den Ladungsausgleich ermöglicht. Die Aufgabe des Separators besteht darin, die positive Elektrode von der negativen Elektrode zu trennen und den Ladungsausgleich durch Permutation von Ionen zu ermöglichen. Als Separator der sekundären Batterie wird insbesondere ein poröses Material, bevorzugt eine Membran bestehend aus einer polymeren Verbindung, wie beispielsweise Polyolefin, Polyamid, oder Polyester, verwendet. Weiterhin können Separatoren aus porösen keramischen Materialien verwendet werden.

Die Hauptaufgabe des Elektrolyten ist, die lonenleitfähigkeit zu gewährleisten, die zum Ladungsausgleich nötig ist. Der Elektrolyt der sekundären Batterie kann sowohl eine Flüssigkeit, als auch eine oligomere oder polymere Verbindung mit hoher lonenleitfähigkeit ("*gel electrolyte"* oder *"solid state electrolyte*") sein. Bevorzugt ist er aber eine oligomere oder polymere Verbindung. Ist der Elektrolyt flüssig, so setzt er sich insbesondere aus einem oder mehreren Lösungsmitteln und einem oder mehreren Leitsalzen zusammen.

Das Lösungsmittel der Elektrolyten umfasst bevorzugt unabhängig voneinander eines oder mehrere Lösungsmittel mit hohem Siedepunkt und hoher lonenleitfähigkeit, aber niedriger Viskosität, wie beispielsweise Acetonitril, Dimethylsulfoxid, Ethylencarbonat, Propylencarbonat, Dimethylcarbonat, Diethylcarbonat, Methylethylcarbonat, γ-Butyrolacton, Tetrahydrofuran, Dioxolan, 1,2-Dimethoxyethan, 1,2-Diethoxyethan, Diglyme, Triglyme, Tetraglyme, Ethylacetat, 1,3-Dioxolan oder Wasser.

Das Leitsalz des Elektrolyten besteht aus einem Kation der Formel M^{e+} und einem Anion der Formel An^{f-} der Formel (M^{e+})ₐ(An^{f-})_{b}, wobei e und f Ganzzahlen in Abhängigkeit der Ladung von M und An sind; a und b sind Ganzzahlen, welche die molekulare Zusammensetzung des Leitsalzes repräsentieren.
Als Kation des oben genannten Leitsalzes werden positiv geladene Ionen, bevorzugt Metalle der ersten und zweiten Hauptgruppe, wie beispielsweise Lithium, Natrium, Kalium oder Magnesium, aber auch andere Metalle der Nebengruppen, wie Zink, sowie organische Kationen, wie beispielsweise quartäre Ammoniumverbindungen wie Tetraalkylammoniumverbindungen, verwendet. Bevorzugtes Kation ist Lithium.

Als Anionen des besagten Leitsalzes werden bevorzugt anorganische Anionen, wie Hexafluorophosphat, Tetrafluoroborat, Triflat, Hexafluoroarsenat, Hexafluoroantimonat, Tetrafluoroaluminat, Tetrafluoroindat, Perchlorat, Bis(oxolato)borat, Tetrachloroaluminiat, Tetrachlorogallat, aber auch organische Anionen, wie beispielsweise N(CF₃SO₂)₂⁻, CF₃SO₃⁻, Alkoholate, wie beispielsweise, *tert*-Butanolat oder *iso*-Propylalkoholat, aber auch Halogenide, wie Fluorid, Chlorid, Bromid sowie lodid, verwendet. Bevorzugtes Anion ist Perchlorat, ClO₄⁻. Bevorzugtes Leitsalz ist somit LiClO₄.

Werden ionische Flüssigkeiten verwendet, können diese sowohl als Lösungsmittel des Elektrolyten, als Leitsalz aber auch als kompletter Elektrolyt verwendet werden.

In der Ausführungsform, in der das redoxaktive Elektrodenmaterial dabei als mindestens teilweise Oberflächenbeschichtung von Elektrodenelementen für elektrische Ladungsspeicher, insbesondere Sekundärbatterien, ausgebildet ist, weist ein Elektrodenelement mindestens teilweise eine Schicht auf einer Substratoberfläche auf. Diese Schicht umfasst insbesondere eine Zusammensetzung, enthaltend das erfindungsgemäße Polymer als redoxaktives Material zur Ladungsspeicherung und insbesondere zumindest auch ein Leitfähigkeitsadditiv sowie insbesondere auch zumindest ein Bindeadditiv.

Die Aufbringung dieser Zusammensetzung (anderer Ausdruck für Zusammensetzung: "Komposit") auf dem Substrat ist mittels dem Fachmann bekannten Verfahren möglich. Insbesondere wird das erfindungsgemäße Polymer mit Hilfe eines Elektrodenslurrys auf dem Substrat aufgebracht.
Das Substrat des Elektrodenelements ist insbesondere ausgewählt aus leitfähigen Materialien, bevorzugt Metallen, Kohlenstoffmaterialien, Oxidsubstanzen.

Bevorzugte Metalle sind ausgewählt aus Platin, Gold, Eisen, Kupfer, Aluminium oder eine Kombination aus diesen Metallen. Bevorzugte Kohlenstoffmaterialien, sind ausgewählt aus Glaskohlenstoff, Graphitfolie, Graphen, Kohlenstofffelle. Bevorzugte Oxidsubstanzen sind beispielsweise ausgewählt aus der Gruppe bestehend aus Indiumzinnoxid (ITO), Indiumzinkoxid (IZO), Antimonzinkoxid (AZO), Fluorzinnoxid (FTO) oder Antimonzinnoxid (ATO).
Die Oberflächenschicht des Elektrodenelements umfasst zumindest das erfindungsgemäße Polymer als redoxaktives Material zur Ladungsspeicherung sowie insbesondere zumindest ein Leitfähigkeitsadditiv und ein Bindeadditiv.
Das Leitfähigkeitsadditiv ist insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstoffplättchen, Kohlenstofffasern, Kohlenstoffnanoröhren ("*carbon nanotubes"*), Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen)polystyrensulfonat (= PEDOT:PSS), Polyarcenen ausgewählt.

Bindeadditive sind insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Das Polymer **P²** wird dabei insbesondere in einem Elektrodenslurry auf das Substrat des Elektrodenelementes aufgebracht.

Der Elektrodenslurry ist eine Lösung oder Suspension und umfasst das erfindungsgemäße Polymer sowie insbesondere das vorstehend beschriebene Leitfähigkeitsadditiv und das vorstehend beschriebene Bindeadditiv.

Der Elektrodenslurry umfasst bevorzugt ein Lösungsmittel und weitere Bestandteile umfassend redoxaktives Material zur Speicherung elektrischer Energie (bei dem es sich insbesondere um das erfindungsgemäße Polymer handelt), sowie bevorzugt auch das Leitfähigkeitsadditiv und das Bindeadditiv.
In den weiteren Bestandteilen ist bevorzugt der Anteil an redoxaktivem Material zur Speicherung elektrischer Energie (bei dem es sich insbesondere um das erfindungsgemäße Polymer handelt) von 5 bis 100 Gewichtsprozent, der Anteil des Leitfähigkeitsadditiv 0 bis 80, bevorzugt 5 bis 80, Gewichtsprozent, und der Anteil an Bindeadditiv 0 bis 10, bevorzugt 1 bis 10, Gewichtsprozent, wobei die Summe 100 Gewichtsprozent ergibt.
Als Lösungsmittel für den Elektrodenslurry werden unabhängig voneinander ein oder mehrere Lösungsmittel, bevorzugt Lösungsmittel mit hohem Siedepunkt, bevorzugter ausgewählt aus der Gruppe bestehend aus *N*-Methyl-2-pyrrolidon, Wasser, Dimethylsulfoxid, Ethylencarbonat, Propylencarbonat, Dimethylcarbonat, Methylethylcarbonat, γ-Butyrolacton, Tetrahydrofuran, Dioxolan, Sulfolan, *N,N*'-Dimethylformamid, *N,N*'-Dimethylacetamid, verwendet. Die Konzentration des redoxaktiven Materials, insbesondere des erfindungsgemäßen Polymers, zur Speicherung elektrischer Energie im oben genannten Elektrodenslurry beträgt bevorzugt zwischen 0.1 und 10 mg/ml, besonders bevorzugt zwischen 0.5 und 5 mg/ml.
Wird das Polymer dieser Erfindung als redoxaktives Material für elektrische Ladungsspeicher als positives Elektrodenelement verwendet, so wird als redoxaktives Material zur elektrischen Ladungsspeicherung in der negativen Elektrode ein Material verwendet, welches eine Redoxreaktion bei einem niedrigeren elektrochemischen Potential als das Polymer dieser Erfindung zeigt. Bevorzugt sind solche Materialien ausgewählt aus der Gruppe bestehend aus Kohlenstoffmaterialien, die insbesondere aus der Gruppe bestehend aus Graphit, Graphen, Ruß, Kohlenstofffasern, Kohlenstoffnanoröhren ausgewählt sind, Metalle oder Legierungen, die insbesondere aus der Gruppe bestehend aus Lithium, Natrium, Magnesium, Lithium-Aluminium, Li-Si, Li-Sn, Li-Ti, Si, SiO, SiO₂, Si-SiO₂-Komplex, Zn, Sn, SnO, SnO₂, PbO, PbO₂, GeO, GeO₂, WO₂, MoO₂, Fe₂O₃, Nb2O₅, TiO₂, Li₄Ti₅O₁₂, und Li₂Ti₃O₇ ausgewählt sind, sowie organische redoxaktives Materialien. Beispiele organischer redoxaktiver Materialien sind Verbindungen mit einem stabilen organischen Radikal, Verbindungen mit einer Organoschwefeleinheit, mit einer Chinonstruktur, Verbindungen mit einem Dionsystem, konjugierte Carbonsäuren und deren Salze, Verbindungen mit einer Phtalimid- bzw. Naphtalimidstruktur, Verbindungen mit einer Disulfidverbindung sowie Verbindungen mit einer Phenanthrenstruktur und deren Derivate. Wird in der negativen Elektrode eine oben genannte redoxaktive oligomere oder polymere Verbindung eingesetzt, so kann diese Verbindung auch ein Komposit, also eine Zusammensetzung, sein, bestehend aus dieser oligomeren oder polymeren Verbindung, einem Leitfähigkeitsadditiv und einem Bindeadditiv in einem beliebigen Verhältnis. Das Leitfähigkeitsadditiv ist auch in diesem Fall insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen) polystyrensulfonat (= "PEDOT:PSS"), Polyarcene ausgewählt. Bindeadditive sind auch in diesem Fall insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.
Dieses Komposit kann wie oben beschrieben mit Hilfe eines Elektrodenslurrys durch ein bekanntes Verfahren zur Filmbildung als Schicht auf einem Substrat vorliegen.
Die nachfolgenden Beispiele sollen die Erfindung weiter erläutern, ohne diese darauf zu beschränken.

### Beispiele

### I. Verwendete Chemikalien

2,2,6,6-Tetramethyl-4-piperidinylmethacrylat (CAS-Nummer: 31582-45-3; Schmelzpunkt 61 °C, im Folgenden abgekürzt als "TAA-ol-MA") wurde nach Verfahren des Standes der Technik synthetisiert.

Ethylenglycoldimethacrylat (CAS-Nummer: 97-90-5) wurde erhalten von Evonik.

Ammoniumperoxodisulfat (CAS-Nummer: 7727-54-0) wurde erhalten von Sigma Aldrich.

Polyoxyethylennonylphenylether (CAS-Nummer: 68412-54-4) wurde erhalten von Sigma Aldrich.

Dodecylbenzolsulfonsäurenatriumsalz (CAS-Nummer: 25155-30-0) wurde erhalten von Sigma Aldrich.

4,4'-Azobis(4-cyanovaleriansäure) (CAS-Nummer: 2638-94-0) wurde erhalten von Wako V-501 #AWL2803.

Natriumwolframatdihydrat (CAS-Nummer: 10213-10-2) wurde erhalten von Sigma Aldrich.

Ethylendiamintetraessigsäure (im Folgenden als "EDTA" abgekürzt; CAS-Nummer: 60-00-4) wurde erhalten von Roth.

TEMPO (2,2,6,6,-Tetramethylpiperidinyl-*N*-oxyl; CAS-Nummer: 2564-83-2) wurde von Sigma-Aldrich erhalten.

### II. Polymerisierung von TAA-ol-MA zu Poly(2,2,6,6-Tetramethylpiperidinyloxylmethacrylat) 1

150.0 g TAA-ol-MA (Schmelzpunkt 61 °C), 1 g einer Mischung von 2 Teilen Dodecylbenzolsulfonsäurenatriumsalz und 1 Teil Polyoxyethylennonylphenylether und 2.7 g Ethylenglycoldimethacrylat wurden in einem 1 I Doppelmantelreaktor mit Rührer und Kühler in 467 ml Wasser gegeben und auf 65°C erhitzt. Danach wurde die Mischung 15 min bei 6000 Upm mit einem Ultraturrax (Gerät: Dispergierer der T-Serie Ultra-Turrax; Firma: IKA-Werke GmbH und Co. KG; Model: T 25 D; Dispergierwerkzeug: S 25 N - 25 G) und danach unter Abkühlen auf 40 °C während 30 Minuten dispergiert.

Die so erhaltene Dispersion wurde in einen Reaktor überführt, dort weiterhin auf 40 °C temperiert. Es wurde Stickstoff überleitet und die Stickstoffleitung während der folgenden Reaktion fortgesetzt. Danach wurden 0.27 g Ammoniumperoxodisulfat zugegeben und über Nacht gerührt, wobei die Temperatur zwischen 40 °C und 45 °C lag. Zur Vervollständigung der Reaktion wurde dann noch 1 Stunde bei 65 °C polymerisiert. Dann wurde die Lösung auf Raumtemperatur abgekühlt.
Die quantitative Ausbeute an Polymer **1** entsprach ∼ 90 %. Das Polymer **1** lag als feinverteilter Niederschlag im Reaktor vor und konnte problemlos filtriert und isoliert werden.

### III. Vergleichsversuche V1 bis V6 und erfindungsgemäße Versuche E1 bis E3: Oxidation von 1 zu Poly(2,2,6,6-Tetramethylpiperidinyloxylmethacrylat) 2

40 g des wie in Absatz II beschrieben erhaltenen Polymers **1** wurde in einem Kolben mit 20 g Wasser aufgeschlämmt. Der Kolben wurde mittels eines Wasserbades bzw. Eisbades auf Raumtemperatur (= 25 °C; **V2**, **V4**, **V5**, **V6**) bzw. 1 °C (**V1**, **V3**, **E1**, **E3**) temperiert. Unter Rühren mit einem Rührmotor wurden dann 80 g von Wasser (**V1, V2**) einer Mischung von Wasser mit Methanol (**V3**, **V4**), Ethanol (**V5**, **V6**) bzw. einer Mischung von Wasser mit Ethanol (**E1**, **E2**, **E3**) zugegeben. Im Falle der Vergleichsversuche **V5** und **V6** wurde zur Einstellung des gewünschten Verhältnisses an Ethanol und Wasser vor Zugabe des Ethanols der entsprechende Anteil des zur Aufschlämmung verwendeten Wassers entfernt. In Falle des Vergleichsversuchs **V3** sowie der erfindungsgemäßen Versuche **E1** und **E3** wurde nach Zugabe der alkoholischen Lösung die erhaltene Suspension auf 0 °C (**V3**, **E1**) bzw. mit einer Kältemischung auf ∼ - 12 °C (**E3**) gekühlt Die so erhaltene Suspension wurde dann für weitere 30 Minuten gerührt, um das Polymer aufquellen zu lassen.

Anschließend erfolgte die Zugabe von 1.76 g Natriumwolframatdihydrat und 0.45 g EDTA. Nach ∼ 1 Minute erfolgte zur Oxidation dann der portionsweisen Zusatz von einmal 27.2 g 30 %-iger wässriger Wasserstoffperoxidlösung und nach einer weiteren halben Stunde 27.2 g 50 %-iger wässriger Wasserstoffperoxidlösung. Der Ansatz wurde dann 90 Stunden bei der in der Tabelle unter Abschnitt V angegebenen Temperatur **T₁** gerührt und gegen Ende nochmals je 1 Stunde auf 40 °C erhitzt.

Danach wurde die Reaktionsmischung abgekühlt, über einen Faltenfilter filtriert, dreimal mit 50 g Wasser gewaschen und dann über Nacht in den Vakuumtrockenschrank gegeben. Die Vollständigkeit der Oxidation (Oxidationsgrad = Anteil der sekundären NH-Gruppen, die zu N O• oxidiert wurden) wurde mittels ESR bestimmt.

### IV. ESR-Analyse

Elektronenspinresonanzspektren wurden mittels eines spin EMXmicro CW-EPR spectrometer (EMX micro EMM-6/1/9-VT Kontrolleinheit, ER 070 magnet, EMX premium ER04 X-band microwave bridge, ausgestattet mit einem EMX standard resonator, EMX080 power unit) der Bruker Corporation aufgenommen. Die Proben wurden bei Raumtemperatur vermessen und mit der Bruker Xenon software package, version 1.1b86. The SpinCount™ software module quantitativ ausgewertet. Das Spektrometer wurde mit TEMPO (99% Reinheit, Sigma-Aldrich Chemie GmbH) als Referenz kalibriert. Während der Probenmessung war keine interne Referenz vorhanden Für jede Substanz wurden drei Proben vermessen.

### V. Ergebnisse

Die folgende Tabelle gibt an, welches Verhältnis an Wasser und Methanol bzw. Ethanol während der Oxidation in der Lösung vorlag, welche Temperatur bei der Oxidation benutzt wurde und wie hoch der mittels ESR bestimmte Oxidationsgrad war.

| Versuch | Verwendete Lösungsmittel | | | Verhältnis Wasser: Alkohol | Temperatur **T₁** | Oxidationsgrad |
|---|---|---|---|---|---|---|
| | H₂O | Methanol | Ethanol | | | |
| **V1** | X | - | - | - | 1 °C | 81 % |
| **V2** | x | - | - | - | 25 °C | 96 % |
| **V3** | x | x | - | 7.1 : 1 | 0 °C | 88 % |
| **V4** | x | x | - | 7.1 : 1 | 25 °C | 96 % |
| **V5** | x | x | | 0.75 : 1 | 25 °C | 96.6 % |
| **V6** | x | | x | 0.75 : 1 | 25 °C | 95.2 % |
| **E1** | x | - | x | 7.1 : 1 | 0 °C | 98 % |
| **E2** | x | - | x | 7.1 : 1 | 25 °C | 98 % |
| **E3** | x | - | x | 1.1 : 1 | ∼ - 12 °C | 98.4 % |

### VI. Ergebnisse

Wie aus der unter Punkt V gezeigten Tabelle ersichtlich, wird bei Verwendung einer Mischung von Ethanol und Wasser im Vergleich mit Wasser (**V1**, **V2**) bzw. einer Mischung von Wasser mit Methanol (**V3**, **V4**) ein besserer Oxidationsgrad erreicht. Dieser Effekt wurde allerdings nur für solche Lösungsmittel beobachtet, in denen Ethanol im Unterschuss in Bezug auf Wasser vorliegt, wie aus dem Vergleich der Vergleichsbeispiele **V5** und **V6** mit den erfindungsgemäßen Beispielen **E1**, **E2** und **E3** hervorgeht.

Der in den erfindungsgemäßen Beispielen **E1**, **E2** und **E3** beobachtete Oxidationsgrad von 98 % bzw. 98.4 % ist höher als der im Stand der Technik beschriebene (Seite 8, Zeile 33 der EP 1 911 775 A1 beschreibt eine Umwandlungseffizienz von 95.5 %).

Dieses Ergebnis, dass nämlich ein solch hoher Oxidationsgrad in einem wässrigen Lösungsmittel, welches Ethanol im Unterschuss zu Wasser enthält, beobachtet werden kann, ist völlig überraschend.

## Patentansprüche

1. Verfahren zur Herstellung eines Polymers **P¹** umfassend n¹ Wiederholungseinheiten der allgemeinen chemischen Struktur **(I)** mit 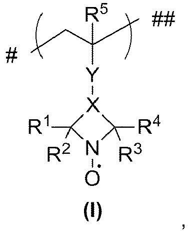 **dadurch gekennzeichnet, dass** man ein Polymer **P²** umfassend n² Wiederholungseinheiten der allgemeinen chemischen Struktur **(II)** mit 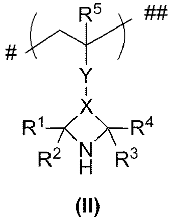
in einem Lösungsmittel umfassend Wasser und Ethanol, wobei im Lösungsmittel das Ethanol im Unterschuss bezogen auf Wasser vorliegt, wobei das Massenverhältnis von Wasser zu Ethanol im Lösungsmittel im Bereich 51 : 49 bis 99 : 1 liegt, oxidiert,
wobei n¹, n² unabhängig voneinander jeweils eine ganze Zahl im Bereich von 4 - 3000000 ist,
wobei die Wiederholungseinheiten der chemischen Struktur **(I)** innerhalb des Polymers **P¹** gleich oder zumindest teilweise voneinander verschieden sind,
wobei die Wiederholungseinheiten der chemischen Struktur **(I)** innerhalb des Polymers **P¹** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
wobei die Wiederholungseinheiten der chemischen Struktur **(II)** innerhalb des Polymers **P²** gleich oder zumindest teilweise voneinander verschieden sind,
wobei die Wiederholungseinheiten der chemischen Struktur **(II)** innerhalb des Polymers **P²** so miteinander verknüpft sind, dass die durch "#" gekennzeichnete Bindung einer bestimmten Wiederholungseinheit mit der durch "##" gekennzeichneten Bindung der benachbarten Wiederholungseinheit verknüpft ist,
und wobei in den chemischen Strukturen **(I)** und **(II)** die Reste R¹, R², R³, R⁴, R⁵ ausgewählt sind aus der Gruppe bestehend aus Wasserstoff, verzweigte oder unverzweigte Alkylgruppe mit 1 bis 4 Kohlenstoffatomen,
X ausgewählt ist aus der Gruppe bestehend aus *-CH₂-**C'**H-CH₂-**,*-**C'**H-CH₂-**, *-**C'**=CH-**,
wobei "*" jeweils die Bindung zu dem mit R¹ und R² verknüpften Kohlenstoffatom bezeichnet,
wobei "**" jeweils die Bindung zu dem mit R³ und R⁴ verknüpften Kohlenstoffatom bezeichnet,
wobei "**C'**" ein Kohlenstoffatom bezeichnet, das zusätzlich mit dem Rest Y verknüpft ist,
wobei Y ausgewählt aus den verbrückenden Resten **(III)** und **(IV)** ist,
wobei **(III)** die Struktur &-(Y¹)ₚ₁-[C=X¹]ₚ₂-(Y²)ₚ₃-B-(Y³)ₚ₆-[C=X²]ₚ₅-(Y⁴)ₚ₄-&& aufweist,
und wobei **(IV)** die Struktur &-(Y⁵)ₚ₉-(C=X³)ₚ₈-(Y⁶)ₚ₇-&& aufweist,
wobei in den verbrückenden Resten **(III)** und **(IV)**
p1, p2, p3 jeweils 0 oder 1 mit der Maßgabe, dass nicht gleichzeitig p1 = p3 = 1 und p2 = 0 ist, sind,
p4, p5, p6 jeweils 0 oder 1 mit der Maßgabe, dass nicht gleichzeitig p4 = p6 = 1 und p5 = 0 ist, sind,
p7, p8, p9 jeweils 0 oder 1 mit der Maßgabe, dass nicht gleichzeitig p7 = p9 = 1 und p8 = 0 ist, und dass, wenn p7 = 1 und p8 = 0, dann p9 = 0 ist, sind,
X¹, X², X³ unabhängig voneinander ausgewählt aus der Gruppe bestehend aus O, S sind,
Y¹, Y², Y³, Y⁴, Y⁵, Y⁶ unabhängig voneinander ausgewählt aus der Gruppe bestehend aus O, S, NH, N-Alkyl sind,
und wobei Y¹ für p1 = 1, p2 = p3 = 0 auch N O• sein kann,
und wobei Y⁴ für p4 = 1, p5 = p6 = 0 auch N O• sein kann,
und wobei Y⁵ für p9 = 1, p7 = p8 = 0 auch N O• sein kann,
B ein zweiwertiger, gegebenenfalls substituierter (hetero)aromatischer Rest oder ein zweiwertiger, gegebenenfalls substituierter aliphatischer Rest ist, wobei der gegebenenfalls substituierte aliphatische Rest zusätzlich mindestens eine Gruppe ausgewählt aus Ether, Thioether, gegebenenfalls nitroxylierter Aminoether, Carbonylgruppe, Carbonsäureestergruppe, Carbonsäureamidgruppe, Sulfonsäureestergruppe, Phosphorsäureester aufweisen kann,
und wobei "&&" für Y die Bindung bezeichnet, über die Y mit X verknüpft ist und wobei "&" für Y die Bindung bezeichnet, über die Y mit dem Kohlenstoffatom, welches mit R⁵ verknüpft ist, verknüpft ist.

2. Verfahren nach Anspruch 1, wobei
X¹, X², X³, Y¹, Y², Y³, Y⁴, Y⁵, Y⁶ unabhängig voneinander ausgewählt aus der Gruppe bestehend aus O, S sind,
und wobei B ein zweiwertiger, gegebenenfalls substituierter (hetero)aromatischer Rest oder ein zweiwertiger, gegebenenfalls substituierter aliphatischer Rest ist, wobei der gegebenenfalls substituierte aliphatische Rest zusätzlich mindestens eine Gruppe ausgewählt aus Ether, Thioether, Carbonylgruppe, Carbonsäureestergruppe, Sulfonsäureestergruppe, Phosphorsäureester aufweisen kann.

3. Verfahren nach Anspruch 2, wobei R¹ = R² = R³ = R⁴ = Methyl und R⁵ = Wasserstoff oder Methyl,
und wobei B ein zweiwertiger (hetero)aromatischer Rest oder ein zweiwertiger, gegebenenfalls mit einer Gruppe ausgewählt aus -F, -Cl, -Br, -I substituierter aliphatischer Rest ist, wobei der gegebenenfalls substituierte aliphatische Rest zusätzlich mindestens eine Gruppe ausgewählt aus Ether, Thioether aufweisen kann, ist.

4. Verfahren nach Anspruch 3, wobei X¹ = X² = X³ = Y¹ = Y² = Y³ = Y⁴ = Y⁵ = Y⁶ = O und wobei B Phenylen oder ein gegebenenfalls mit mindestens einer Gruppe ausgewählt aus -F, -Cl, -Br, -I substituierter Alkylenrest ist.

5. Verfahren nach einem der Ansprüche 1 bis 4, wobei X = *-CH₂-C'H-CH₂-**.

6. Verfahren nach Anspruch 5, wobei die allgemeine chemische Struktur **(I)** folgende Struktur **(I)**"", und die allgemeine chemische Struktur **(II)** folgende Struktur **(II)**"" hat: 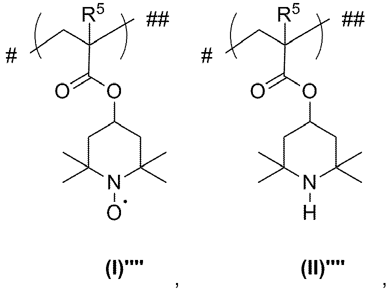 wobei R⁵ = Methyl oder Wasserstoff.

7. Verfahren nach einem der Ansprüche 1 bis 6, welches bei einer Temperatur **T₁** ≤ 40 °C durchgeführt wird.

8. Verfahren nach einem der Ansprüche 1 bis 7, wobei der Anteil der Summe der Gewichte von Ethanol und Wasser im Lösungsmittel mindestens 50 Gew.-%, bezogen auf das Gesamtgewicht des Lösungsmittels, beträgt.

9. Verfahren nach Anspruch 8, wobei der Gewichtsanteil aller von Ethanol verschiedener C₁ - C₄-Alkohole im Lösungsmittel weniger als 50 Gew.-%, bezogen auf das Gewicht des vom Lösungsmittel umfassten Ethanols, beträgt.

10. Verfahren nach einem der Ansprüche 1 bis 9, wobei n¹, n² unabhängig voneinander jeweils eine ganze Zahl im Bereich von 4 - 1000000 ist.

## Claims

1. Process for preparing a polymer **P¹** comprising n¹ repeat units of the general chemical structure **(I)** 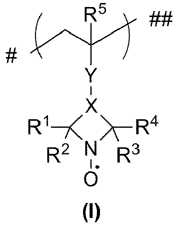 **characterized in that** a polymer **P²** comprising n² repeat units of the general chemical structure **(II)** 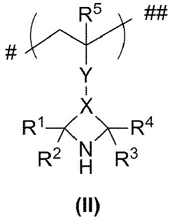
is oxidized in a solvent comprising water and ethanol, where the ethanol is present in the solvent in deficiency relative to water, wherein the mass ratio of water to ethanol in the solvent is in the range of 51:49 to 99:1,
where n¹, n² are each independently an integer in the range of 4-3 000 000,
where the repeat units of the chemical structure **(I)** within the polymer **P¹** are the same or at least partly different from one another,
where the repeat units of the chemical structure **(I)** within the polymer **P¹** are joined to one another in such a way that the bond identified by "#" in a particular repeat unit is joined to the bond identified by "##" in the adjacent repeat unit,
where the repeat units of the chemical structure **(II)** within the polymer **P²** are the same or at least partly different from one another,
where the repeat units of the chemical structure **(II)** within the polymer **P²** are joined to one another in such a way that the bond identified by "#" in a particular repeat unit is joined to the bond identified by "##" in the adjacent repeat unit,
and where, in the chemical structures **(I)** and **(II)**, the R¹, R², R³, R⁴, R⁵ radicals are selected from the group consisting of hydrogen, branched or unbranched alkyl group having 1 to 4 carbon atoms,
X is selected from the group consisting of *-CH₂-**C'**H-CH₂-**,*-**C'**H-CH₂-**, *-**C'**=CH-**,
where "*" in each case denotes the bond to the carbon atom joined to R¹ and R²,
where "**" in each case denotes the bond to the carbon atom joined to R³ and R⁴,
where "**C'**" denotes a carbon atom additionally joined to the Y radical,
where Y is selected from the bridging radicals **(III)** and **(IV)**,
where **(III)** has the structure &-(Y¹)ₚ₁-[C=X¹]ₚ₂-(Y²)ₚ₃-B-(Y³)ₚ₆-[C=X²]ₚ₅-(Y⁴)ₚ₄-&&,
and where **(IV)** has the structure &-(Y⁵)ₚ₉-(C=X³)ₚ₈-(Y⁶)ₚ₇-&&,
where, in the bridging radicals **(III)** and **(IV)**,
p1, p2, p3 are each 0 or 1, with the proviso that it is not simultaneously the case that p1 = p3 = 1 and p2 = 0,
p4, p5, p6 are each 0 or 1, with the proviso that it is not simultaneously the case that p4 = p6 = 1 and p5 = 0,
p7, p8, p9 are each 0 or 1, with the proviso that it is not simultaneously the case that p7 = p9 = 1 and p8 = 0, and that, when p7 = 1 and p8 = 0, p9 = 0,
X¹, X², X³ are independently selected from the group consisting of O, S,
Y¹, Y², Y³, Y⁴, Y⁵, Y⁶ are independently selected from the group consisting of O, S, NH, N-alkyl,
and where Y¹, when p1 = 1, p2 = p3 = 0, may also be N O•,
and where Y⁴, when p4 = 1, p5 = p6 = 0, may also be N O•,
and where Y⁵, when p9 = 1, p7 = p8 = 0, may also be N O•,
B is a divalent, optionally substituted (hetero)aromatic radical or a divalent, optionally substituted aliphatic radical, where the optionally substituted aliphatic radical may additionally have at least one group selected from ether, thioether, optionally nitroxylated amino ether, carbonyl group, carboxylic ester group, carboxamide group, sulphonic ester group, phosphoric ester,
and where "&&" for Y denotes the bond via which Y is joined to X and where "&" for Y denotes the bond via which Y is joined to the carbon atom joined to R⁵.

2. Process according to Claim 1, where
X¹, X², X³, Y¹, Y², Y³, Y⁴, Y⁵, Y⁶ are independently selected from the group consisting of O, S,
and where B is a divalent, optionally substituted (hetero)aromatic radical or a divalent, optionally substituted aliphatic radical, where the optionally substituted aliphatic radical may additionally have at least one group selected from ether, thioether, carbonyl group, carboxylic ester group, sulphonic ester group, phosphoric ester.

3. Process according to Claim 2, where R¹ = R² = R³ = R⁴ = methyl and R⁵ = hydrogen or methyl,
and where B is a divalent (hetero)aromatic radical or a divalent aliphatic radical optionally substituted by a group selected from -F, -Cl, -Br, -I, where the optionally substituted aliphatic radical may additionally have at least one group selected from ether, thioether.

4. Process according to Claim 3, where X¹ = X² = X³ = Y¹ = Y² = Y³ = Y⁴ = Y⁵ = Y⁶ = O and where B is phenylene or an alkylene radical optionally substituted by at least one group selected from -F, -Cl, -Br, -I.

5. Process according to any of Claims 1 to 4, where X = *-CH₂-**C**'H-CH₂-**.

6. Process according to Claim 5, wherein the general chemical structure **(I)** has the following structure **(I)**'''', and the general chemical structure **(II)** has the following structure **(II)**''''**:** 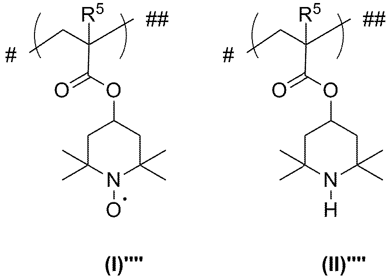 where R⁵ = methyl or hydrogen.

7. Process according to any of Claims 1 to 6, which is conducted at a temperature **T₁** ≤ 40°C.

8. Process according to any of Claims 1 to 7, wherein the proportion of the sum total of the weights of ethanol and water in the solvent is at least 50% by weight, based on the total weight of the solvent.

9. Process according to Claim 8, wherein the proportion by weight of all C₁-C₄ alcohols other than ethanol in the solvent is less than 50% by weight, based on the weight of the ethanol encompassed by the solvent.

10. Process according to any of Claims 1 to 9, where n¹, n² are each independently an integer in the range of 4-1 000 000.

## Revendications

1. Procédé de fabrication d'un polymère **P¹** comprenant n¹ unités de répétition de la structure chimique générale **(I)** : 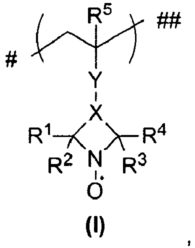 **caractérisé en ce qu'**un polymère **P²** comprenant n² unités de répétition de la structure chimique générale **(II)** : 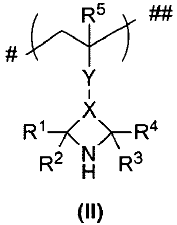
est oxydé dans un solvant comprenant de l'eau et de l'éthanol, l'éthanol étant présent en déficit par rapport à l'eau dans le solvant, le rapport en masse entre l'eau et l'éthanol se situant dans la plage allant de 51:49 à 99:1,
n¹, n² représentant chacun indépendamment l'un de l'autre un nombre entier dans la plage allant de 4 à 3 000 000,
les unités de répétition de la structure chimique **(I)** dans le polymère **P¹** étant identiques ou au moins partiellement différentes les unes des autres,
les unités de répétition de la structure chimique **(I)** dans le polymère **P¹** étant reliées les unes avec les autres de telle sorte que la liaison **caractérisée par** « # » d'une unité de répétition déterminée soit reliée avec la liaison **caractérisée par** « ## » de l'unité de répétition voisine,
les unités de répétition de la structure chimique **(II)** dans le polymère **P²** étant identiques ou au moins partiellement différentes les unes des autres,
les unités de répétition de la structure chimique **(II)** dans le polymère **P²** étant reliées les unes avec les autres de telle sorte que la liaison **caractérisée par** « # » d'une unité de répétition déterminée soit reliée avec la liaison **caractérisée par** « ## » de l'unité de répétition voisine,
et les radicaux R¹, R², R³, R⁴, R⁵ dans les structures chimiques **(I)** et **(II)** étant choisis dans le groupe constitué par l'hydrogène, un groupe alkyle ramifié ou non ramifié de 1 à 4 atomes de carbone,
X étant choisi dans le groupe constitué par *-CH₂**C**'H-CH₂-**, *-**C'**H-CH₂-**, *-**C**'=CH-**,
« * » désignant à chaque fois la liaison avec l'atome de carbone relié avec R¹ et R²,
« ** » désignant à chaque fois la liaison avec l'atome de carbone relié avec R³ et R⁴,
« **C'** » désignant un atome de carbone qui est en outre relié avec le radical Y,
Y étant choisi parmi les radicaux pontants **(III)** et **(IV)**,
**(III)** présentant la structure &-(Y¹)ₚ₁-[C=X¹]ₚ₂-(Y²)ₚ₃-B-(Y³)ₚ₆-[C=X²]ₚ₅-(Y⁴)ₚ₄-&&,
et **(IV)** présentant la structure &- (Y⁵)ₚ₉-(C=X³)ₚ₈-(Y⁶)ₚ₇-&&,
dans les radicaux pontants **(III)** et **(IV)**, p1, p2, p3 représentant chacun 0 ou 1, à condition que les équations p1 = p3 = 1 et p2 = 0 ne soient pas satisfaites simultanément,
p4, p5, p6 représentant chacun 0 ou 1, à condition que les équations p4 = p6 = 1 et p5 = 0 ne soient pas satisfaites simultanément,
p7, p8, p9 représentant chacun 0 ou 1, à condition que les équations p7 = p9 = 1 et p8 = 0 ne soient pas satisfaites simultanément, et que lorsque p7 = 1 et p8 = 0, alors p9 = 0,
X¹, X², X³ étant choisis indépendamment les uns des autres dans le groupe constitué par O, S, Y¹, Y², Y³, Y⁴, Y⁵, Y⁶ étant choisis indépendamment les uns des autres dans le groupe constitué par O, S, NH, N-alkyle,
et Y¹ pour p1 = 1, p2 = p3 = 0 pouvant également représenter NO·,
et Y⁴ pour p4 = 1, p5 = p6 = 0 pouvant également représenter NO·,
et Y⁵ pour p9 = 1, p7 = p8 = 0 pouvant également représenter NO·,
B représentant un radical (hétéro)aromatique bivalent éventuellement substitué ou un radical aliphatique bivalent éventuellement substitué, le radical aliphatique éventuellement substitué pouvant comprendre en outre au moins un groupe choisi parmi un éther, un thioéther, un aminoéther éventuellement nitroxylé, un groupe carbonyle, un groupe ester d'acide carboxylique, un groupe amide d'acide carboxylique, un groupe ester d'acide sulfonique, un ester d'acide phosphorique,
et « && » désignant pour Y la liaison par laquelle Y est relié avec X, et « & » désignant pour Y la liaison par laquelle Y est relié avec l'atome de carbone qui est relié avec R⁵.

2. Procédé selon la revendication 1, dans lequel
X¹, X², X³, Y¹, Y², Y³, Y⁴, Y⁵, Y⁶ sont choisis indépendamment les uns des autres dans le groupe constitué par O, S,
et dans lequel B représente un radical (hétéro)aromatique bivalent éventuellement substitué ou un radical aliphatique bivalent éventuellement substitué, le radical aliphatique éventuellement substitué pouvant comprendre en outre au moins un groupe choisi parmi un éther, un thioéther, un groupe carbonyle, un groupe ester d'acide carboxylique, un groupe ester d'acide sulfonique, un ester d'acide phosphorique.

3. Procédé selon la revendication 2, dans lequel R¹ = R² = R³ = R⁴ = méthyle et R⁵ = hydrogène ou méthyle,
et dans lequel B représente un radical (hétéro)aromatique bivalent ou un radical aliphatique bivalent, éventuellement substitué avec un groupe choisi parmi -F, -Cl, -Br, -I, le radical aliphatique éventuellement substitué pouvant comprendre en outre au moins un groupe choisi parmi un éther, un thioéther.

4. Procédé selon la revendication 3, dans lequel X¹ = X² = X³ = Y¹ = Y² = Y³ = Y⁴ = Y⁵ = Y⁶ = O et dans lequel B représente un phénylène ou un radical alkylène éventuellement substitué avec au moins un groupe choisi parmi -F, -Cl, -Br, -I.

5. Procédé selon l'une quelconque des revendications 1 à 4, dans lequel X = *-CH₂-**C'**H-CH₂-**.

6. Procédé selon la revendication 5, dans lequel la structure chimique générale **(I)** a la structure **(I)**'''' suivante et la structure chimique générale **(II)** a la structure **(II)**'''' suivante : 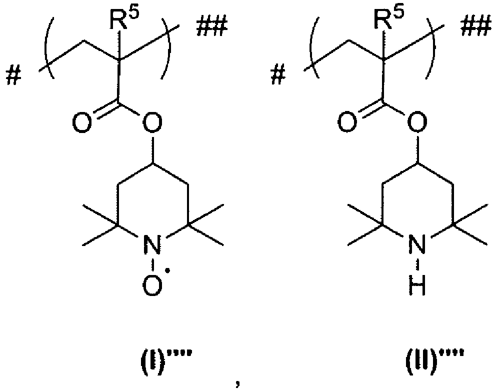 dans lesquelles R⁵ = méthyle ou hydrogène.

7. Procédé selon l'une quelconque des revendications 1 à 6, qui est réalisé à une température **T₁** ≤ 40 °C.

8. Procédé selon l'une quelconque des revendications 1 à 7, dans lequel la proportion de la somme des poids d'éthanol et d'eau dans le solvant est d'au moins 50 % en poids, par rapport au poids total du solvant.

9. Procédé selon la revendication 8, dans lequel la proportion en poids de tous les alcools en C₁-C₄ différents de l'éthanol dans le solvant est de moins de 50 % en poids, par rapport au poids de l'éthanol compris dans le solvant.

10. Procédé selon l'une quelconque des revendications 1 à 9, dans lequel n¹, n² représentent chacun indépendamment l'un de l'autre un nombre entier dans la plage allant de 4 à 1 000 000.
